# EUROPEAN PATENT APPLICATION

(11) **EP 4 757 424 A2**
(43) Date of publication of application: **10.06.2026**
(21) Application number: 25226008.8
(22) Date of filing: 21.05.2021
(51) Int. Cl.: H04W 48/14

(54) **INFORMATION PROCESSING METHOD AND RELATED DEVICE**

(30) Priority: 30.05.2020 CN 202010480881
(62) Divisional of application: 21816869.8
(71) Applicant: Huawei Technologies Co., Ltd., Shenzhen, Guangdong 518129 (CN)
(72) Inventor: XU, Chen, Shenzhen, 518129 (CN); WANG, Jian, Shenzhen, 518129 (CN); ZHANG, Gongzheng, Shenzhen, 518129 (CN); LI, Rong, Shenzhen, 518129 (CN); WANG, Jun, Shenzhen, 518129 (CN)
(74) Representative: Gill Jennings & Every LLP

(57) **Abstract**

Embodiments of this application disclose an information processing method and a related device. Embodiments of this application provide a first AI entity in an access network, and define a plurality of basic interaction modes between the first AI entity and a terminal device. In an interaction mode, the first AI entity may receive second AI model information sent by the terminal device. The second AI model information does not include user data of the terminal device. The first AI entity may update first AI model information of the first AI entity based on the second AI model information, and then send updated first AI model information to the terminal device, so that the terminal device trains and updates the second AI model information. It can be learned that the first AI entity in the access network applies an AI technology to a radio access network. This helps improve a processing capability of the radio access network.

## Description

This application claims priority to Chinese Patent Application No. 202010480881.7, filed with the China National Intellectual Property Administration on May 30, 2020 and entitled "INFORMATION PROCESSING METHOD AND RELATED DEVICE", which is incorporated herein by reference in its entirety.

### TECHNICAL FIELD

This application relates to the field of communications technologies, and in particular, to an information processing method and a related device.

### BACKGROUND

An artificial intelligence (artificial intelligence, AI) technology is successfully applied in the field of image processing and natural language processing. For example, the AI technology is applied to a network layer (such as network optimization, mobility management, and resource allocation), or the AI technology is applied to a physical layer (such as channel coding/decoding, channel prediction, and a receiving device). An AI entity may be deployed in an access network to improve a processing capability of the access network (for example, improve resource allocation efficiency). However, currently a basic interaction mode between the AI entity in the access network and user equipment (user equipment, UE) is not defined, and the AI technology cannot be efficiently applied to a radio access network.

### SUMMARY

Embodiments of this application provide an information processing method and a related device. In the information processing method, an AI technology may be applied to a radio access network, to help improve a processing capability of the radio access network.

According to a first aspect, an embodiment of this application provides an information processing method, and the method may be applied to a first AI entity in an access network. The first AI entity may receive second AI model information sent by a terminal device. The second AI model information does not include user data of the terminal device. The first AI entity updates first AI model information based on the second AI model information. The first AI entity sends updated first AI model information to the terminal device.

It can be learned that the foregoing method procedure defines a basic interaction mode between the first AI entity and the terminal device. Both the first AI entity and the terminal device have an AI training capability. In this case, the first AI entity may perform training based on a second AI model sent by the terminal device, update a first AI model, and send an updated first AI model to the terminal device.

The second AI model information sent by the terminal device does not include the user data of the terminal device. This helps implement privacy protection of the terminal device. The foregoing training interaction may update the first AI model of the first AI entity. This helps improve processing capabilities of the first AI entity and the terminal device.

In a possible design, the first AI entity may further receive a request message sent by the terminal device. The request message requests the first AI model information. The first AI entity sends the first AI model information to the terminal device.

It can be learned that the foregoing method procedure defines another basic interaction mode between the first AI entity and the terminal device. When the terminal device has an AI inference capability, the first AI entity receives the request message of the terminal device, and sends the first AI model information to the terminal device. Correspondingly, after receiving the first AI model information, the terminal device may perform inference based on to-be-decided data and the AI model, to obtain AI decision information.

In a possible design, before the first AI entity receives the request message sent by the terminal device, the first AI entity may further receive AI information of the terminal device. The AI information includes an AI capability parameter. The AI capability parameter indicates whether the terminal device has an AI inference capability and/or an AI training capability.

In a possible design, if the AI capability parameter indicates that the terminal device has the AI inference capability, the first AI entity receives AI decision information and status information that are sent by the terminal device. The AI decision information is obtained by the terminal device by inputting the status information into the second AI model for inference. The status information is obtained by the terminal device based on observation information.

It can be learned that when the terminal device has the AI inference capability, the terminal device may obtain the AI decision information, and send the AI decision information to the first AI entity, so that the first AI entity obtains the AI decision information of the terminal device. This helps the first AI entity update the AI model.

In a possible design, the first AI entity receives AI information of the terminal device. The AI information includes an AI update parameter.

The first AI entity receives feedback information if the AI update parameter indicates scheduled AI update or event-triggered AI update. The feedback information indicates data used for AI training.

In a possible design, the first AI entity receives AI information of the terminal device. The AI information includes an AI update parameter. The first AI entity receives feedback information if the AI update parameter indicates scheduled AI update or event-triggered AI update. The feedback information indicates data used for AI training.

It can be learned that the AI update parameter in the AI information of the terminal device may indicate the terminal device to perform AI update. Correspondingly, the first AI entity may receive the feedback information sent by the terminal device. The feedback information may be used for training update of the first AI entity. This helps improve a processing capability of the first AI entity.

In a possible design, the first AI entity updates the first AI model based on AI training data. The AI training data includes one or more of the AI decision information, the status information, or the feedback information.

In a possible design, the feedback information includes reward information; and the reward information is used for updating the first AI model.

In a possible design, the reward information is determined based on a reward function. The reward function is determined based on a target parameter *θ* and a weight value *ϕ* of the target parameter. The target parameter is performance data obtained by the terminal device by executing the AI decision information, and the weight value of the target parameter is determined by the first AI entity based on performance data of one or more terminal devices.

It can be learned that in this embodiment of this application, a deep reinforcement learning procedure is expanded, and the first AI entity can monitor a performance indicator of a system, to help update the first AI model.

According to a second aspect, an embodiment of this application provides an information processing method, and the method is applied to a terminal device. The terminal device sends a request message to a first AI entity. The request message requests first AI model information. The terminal device receives the first AI model information sent by the first AI entity. The terminal device inputs status information into a first AI model for inference, to obtain AI decision information of the terminal device. The status information is determined based on observation information, and the observation information indicates data used for AI decision.

It can be learned that when the terminal device has an AI inference capability, the terminal device may obtain the first AI model information from the first AI entity, and determine a second AI model of the terminal device based on the first AI model information. The terminal device may input the data used for AI decision into the second AI model for inference, to obtain the AI decision information. Through interaction between the terminal device and the first AI entity, a procedure of implementing an AI inference function by the terminal device is completed. This helps improve a processing capability of the terminal device.

In a possible design, before the terminal device sends the request message to the first AI entity, the terminal device may further send AI information of the terminal device to the first AI entity. The AI information includes an AI capability parameter. The AI capability parameter indicates that the terminal device has an AI inference capability.

It can be learned that when the terminal device has the AI inference capability, the terminal device may notify the first AI entity through interaction with the first AI entity.

In a possible design, the terminal device may further send the AI decision information and the status information to the first AI entity.

It can be learned that when the terminal device has the AI inference capability, the terminal device may send, to the first AI entity through interaction with the first AI entity, the AI decision information obtained through inference.

In a possible design, AI information of the terminal device includes an AI capability parameter and/or an AI update parameter. The terminal device may send feedback information to the first AI entity if the AI update parameter indicates scheduled AI update or event-triggered AI update. The feedback information indicates data used for AI training.

It can be learned that when the AI update parameter of the terminal device indicates that AI update is required, the terminal device may notify, through interaction with the first AI entity, the first AI entity to also perform AI training to update data.

In a possible design, the terminal device obtains the second AI model based on AI training data if the AI capability parameter indicates that the terminal device has a AI training capability. The AI training data includes one or more of the AI decision information, the status information, or the feedback information.

It can be learned that when the terminal device has the AI training capability, the terminal device may update the local second AI model through training of the terminal device.

In a possible design, the terminal device sends second AI model information to the first AI entity. The terminal device receives updated first AI model information sent by the first AI entity. The updated first AI model information is determined by the first AI entity based on the second AI model information.

It can be learned that when the terminal device has the AI training capability, the terminal device may send the local second AI model information to the first AI entity through interaction with the first AI entity, so that the first AI entity updates the first AI model information based on the second AI model information. In addition, the second AI model information sent by the terminal device to the first AI entity is irrelevant to data of the terminal device. This facilitates privacy protection of the terminal device.

In a possible design, the feedback information includes reward information; and the reward information is used for updating the first AI model.

In a possible design, the reward information is determined based on a reward function. The reward function is determined based on a target parameter *θ* and a weight value *ϕ* of the target parameter. The target parameter is performance data obtained by the terminal device by executing the AI decision information, and the weight value of the target parameter is determined by the first AI entity based on performance data of one or more terminal devices.

It can be learned that in this embodiment of this application, a deep reinforcement learning procedure is expanded. If the terminal device has the AI training capability, a performance indicator of a system can be monitored. This helps update the local second AI model.

According to a third aspect, an embodiment of this application provides an information processing method, and the method may be applied to a first AI entity in an access network. The first AI entity may receive observation information sent by a terminal device. The observation information indicates data used for AI decision. The first AI entity determines AI decision information of the terminal device based on the observation information and a first AI model, and sends the AI decision information to the terminal device.

It can be learned that the foregoing method procedure defines another basic interaction mode between the first AI entity and the terminal device. The first AI entity has an AI inference capability, and may determine the AI decision information of the terminal device based on the first AI model of the first AI entity and the data that is sent by the terminal device and that is used for AI decision. In other words, the first AI entity in the access network applies an AI technology to a radio access network. This helps improve a processing capability of the radio access network.

In a possible design, before receiving the observation information sent by the terminal device, the first AI entity may further receive AI information of the terminal device. The AI information includes an AI capability parameter. The AI capability parameter indicates whether the terminal device has an AI inference capability and/or an AI training capability.

In a possible design, the first AI entity receives the observation information sent by the terminal device if the AI capability parameter of the terminal device indicates that the terminal device has no AI capability.

It can be learned that if the terminal device has no AI inference capability, the terminal device may implement a related AI function by using the first AI entity.

In a possible design, the first AI entity may preprocess the observation information to obtain corresponding status information. Then, the first AI entity inputs the status information into the first AI model for inference, to obtain the AI decision information of the terminal device.

It can be learned that in a process of obtaining the AI decision information of the terminal device, the first AI entity first needs to convert the observation information into the status information that can be processed by the AI model, to obtain the AI decision information.

According to a fourth aspect, an embodiment of this application provides an information processing method, and the method may be applied to a terminal device. The terminal device sends observation information to a first AI entity. The observation information indicates data used for AI decision. The terminal device receives AI decision information that is of the terminal device and that is sent by the first AI entity, and executes a decision based on the AI decision information.

It can be learned that the terminal device may obtain the AI decision information of the terminal device through interaction with the first AI entity, to implement a corresponding AI function.

In a possible design, before the terminal device sends the observation information to the first AI entity, the terminal device may further send AI information of the terminal device to the first AI entity. The AI information includes an AI capability parameter. The AI capability parameter indicates that the terminal device has no AI capability.

In a possible design, the AI decision information of the terminal device is obtained by the first AI entity by inputting status information into a first AI model for inference, and the status information is obtained by the first AI entity based on the observation information.

It can be learned that when the terminal device has no AI capability, the terminal device may obtain the AI decision information of the terminal device through interaction with the first AI entity.

According to a fifth aspect, an embodiment of this application provides a first AI entity. The first AI entity includes an intelligent decision module. The intelligent decision module is configured to receive second AI model information sent by a terminal device. The second AI model information does not include user data of the terminal device. The intelligent decision module is further configured to update first AI model information based on the second AI model information. The first AI model information is AI model information of the first AI entity. The intelligent decision module is further configured to send updated first AI model information to the terminal device.

In a possible design, the intelligent decision module is further configured to receive a request message sent by the terminal device. The request message requests the first AI model information. After receiving the request message, the intelligent decision module may send the first AI model information to the terminal device.

In a possible design, the first AI entity further includes a preprocessing module. The preprocessing module is configured to receive AI information of the terminal device. The AI information includes an AI capability parameter.

In a possible design, if the AI capability parameter indicates that the terminal device has an AI inference capability, the intelligent decision module is further configured to receive AI decision information and status information that are sent by the terminal device. The AI decision information is obtained by the terminal device by inputting the status information into a second AI model for inference, the status information is obtained by the terminal device based on observation information, and the observation information indicates data used for AI decision.

In a possible design, the preprocessing module is further configured to receive AI information of the terminal device. The AI information includes an AI update parameter. The first AI entity may further include a data collection and training module. The data collection and training module is configured to receive feedback information if the AI update parameter indicates scheduled AI update or event-triggered AI update. The feedback information indicates data used for AI training.

In a possible design, the intelligent decision module is further configured to update a first AI model based on AI training data. The AI training data includes one or more of the AI decision information, the status information, or the feedback information.

In a possible design, the feedback information includes reward information; and the reward information is used for updating the first AI model.

In a possible design, the reward information is determined based on a reward function. The reward function is determined based on a target parameter *θ* and a weight value *ϕ* of the target parameter. The target parameter is performance data obtained by the terminal device by executing the AI decision information, and the weight value of the target parameter is determined by the first AI entity based on performance data of one or more terminal devices.

According to a sixth aspect, an embodiment of this application provides a terminal device. The terminal device includes a transceiver module and a processing module. The transceiver module is configured to send a request message to a first AI entity. The request message requests first AI model information. The transceiver module is further configured to receive the first AI model information sent by the first AI entity. The processing module is configured to input status information into a second AI model for inference, to obtain AI decision information of the terminal device. The status information is determined based on observation information. The observation information indicates data used for AI decision. The second AI model is determined by the terminal device based on the first AI model information.

In a possible design, the transceiver module is further configured to send AI information of the terminal device to the first AI entity. The AI information includes an AI capability parameter. The AI capability parameter indicates that the terminal device has an AI inference capability.

In a possible design, the transceiver module is further configured to send the AI decision information and the status information to the first AI entity.

In a possible design, AI information of the terminal device includes an AI capability parameter and/or an AI update parameter. The transceiver module is further configured to send feedback information to the first AI entity if the AI update parameter indicates scheduled AI update or event-triggered AI update. The feedback information indicates data used for AI training.

In a possible design, the processing module is further configured to obtain the second AI model based on AI training data if the AI capability parameter indicates that the terminal device has a AI training capability. The AI training data includes one or more of the AI decision information, the status information, or the feedback information.

In a possible design, the transceiver module is further configured to send second AI model information to the first AI entity. The transceiver module may further receive updated first AI model information sent by the first AI entity. The updated first AI model information is determined by the first AI entity based on the second AI model information.

In a possible design, the feedback information includes reward information. The reward information is used for updating a first AI model.

In a possible design, the reward information is determined based on a reward function. The reward function is determined based on a target parameter *θ* and a weight value *ϕ* of the target parameter. The target parameter is performance data obtained by the terminal device by executing the AI decision information, and the weight value of the target parameter is determined by the first AI entity based on performance data of one or more terminal devices.

According to a seventh aspect, an embodiment of this application provides a first AI entity. The first AI entity includes a preprocessing module and an intelligent decision module. The preprocessing module is configured to receive observation information sent by a terminal device. The observation information indicates data used for AI decision. The intelligent decision module is configured to determine AI decision information of the terminal device based on the observation information and a first AI model. The intelligent decision module is further configured to send the AI decision information to the terminal device.

In a possible design, the preprocessing module is further configured to receive AI information of the terminal device. The AI information includes an AI capability parameter.

In a possible design, the preprocessing module is configured to receive the observation information sent by the terminal device if the AI capability parameter of the terminal device indicates that the terminal device has no AI capability.

In a possible design, the preprocessing module is further configured to preprocess the observation information to obtain corresponding status information. The intelligent decision module is further configured to input the status information into the first AI model for inference, to obtain the AI decision information of the terminal device.

According to an eighth aspect, an embodiment of this application provides a terminal device. The terminal device includes a transceiver module and a processing module. The transceiver module is configured to send observation information to a first AI entity. The observation information indicates data used for AI decision. The transceiver module is further configured to receive AI decision information that is of the terminal device and that is sent by the first AI entity. The processing module is configured to execute a decision based on the AI decision information.

In a possible design, the transceiver module is further configured to send AI information of the terminal device to the first AI entity. The AI information includes an AI capability parameter. The AI capability parameter indicates that the terminal device has no AI capability.

In a possible design, the AI decision information of the terminal device is obtained by the first AI entity by inputting status information into a first AI model for inference, and the status information is obtained by the first AI entity based on the observation information.

According to a ninth aspect, an embodiment of this application provides a first AI entity. The entity has a function of implementing the information processing method provided in the first aspect. The function may be implemented by hardware, or may be implemented by hardware executing corresponding software. The hardware or the software includes one or more modules corresponding to the function.

According to a tenth aspect, an embodiment of this application provides a terminal device. The device has a function of implementing the information processing method provided in the second aspect. The function may be implemented by hardware, or may be implemented by hardware executing corresponding software. The hardware or the software includes one or more modules corresponding to the function.

According to an eleventh aspect, an embodiment of this application provides a first AI entity. The entity has a function of implementing the information processing method provided in the third aspect. The function may be implemented by hardware, or may be implemented by hardware executing corresponding software. The hardware or the software includes one or more modules corresponding to the function.

According to a twelfth aspect, an embodiment of this application provides a terminal device. The device has a function of implementing the information processing method provided in the fourth aspect. The function may be implemented by hardware, or may be implemented by hardware executing corresponding software. The hardware or the software includes one or more modules corresponding to the function.

According to a thirteenth aspect, an embodiment of this application provides a communication system. The communication system includes the first AI entity provided in the fifth aspect, the seventh aspect, the ninth aspect, or the eleventh aspect, and the terminal device provided in the sixth aspect, the eighth aspect, the tenth aspect, or the twelfth aspect.

According to a fourteenth aspect, an embodiment of this application provides a computer-readable storage medium. The readable storage medium includes a program or instructions, and when the program or the instructions is/are run on a computer, the computer is enabled to perform the method according to any one of the first aspect or the possible implementations of the first aspect.

According to a fifteenth aspect, an embodiment of this application provides a computer-readable storage medium. The readable storage medium includes a program or instructions, and when the program or the instructions is/are run on a computer, the computer is enabled to perform the method according to any one of the second aspect or the possible implementations of the second aspect.

According to a sixteenth aspect, an embodiment of this application provides a computer-readable storage medium. The readable storage medium includes a program or instructions, and when the program or the instructions is/are run on a computer, the computer is enabled to perform the method according to any one of the third aspect or the possible implementations of the third aspect.

According to a seventeenth aspect, an embodiment of this application provides a computer-readable storage medium. The readable storage medium includes a program or instructions, and when the program or the instructions is/are run on a computer, the computer is enabled to perform the method according to any one of the fourth aspect or the possible implementations of the fourth aspect.

According to an eighteenth aspect, an embodiment of this application provides a chip or a chip system. The chip or the chip system includes at least one processor and an interface, the interface is interconnected to the at least one processor through a line, and the at least one processor is configured to run a computer program or instructions, to perform the method described in any one of the first aspect or the possible implementations of the first aspect.

According to a nineteenth aspect, an embodiment of this application provides a chip or a chip system. The chip or the chip system includes at least one processor and an interface, the interface is interconnected to the at least one processor through a line, and the at least one processor is configured to run a computer program or instructions, to perform the method described in any one of the second aspect or the possible implementations of the second aspect.

According to a twentieth aspect, an embodiment of this application provides a chip or a chip system. The chip or the chip system includes at least one processor and an interface, the interface is interconnected to the at least one processor through a line, and the at least one processor is configured to run a computer program or instructions, to perform the method described in any one of the third aspect or the possible implementations of the third aspect.

According to a twenty-first aspect, an embodiment of this application provides a chip or a chip system. The chip or the chip system includes at least one processor and an interface, the interface is interconnected to the at least one processor through a line, and the at least one processor is configured to run a computer program or instructions, to perform the method described in any one of the fourth aspect or the possible implementations of the fourth aspect.

The interface in the chip may be an input/output interface, a pin, a circuit, or the like.

The chip system in the foregoing aspects may be a system-on-chip (system on chip, SOC), a baseband chip, or the like. The baseband chip may include a processor, a channel encoder, a digital signal processor, a modem, an interface module, and the like.

In a possible implementation, the chip or the chip system described in this application further includes at least one memory, and the at least one memory stores instructions. The memory may be a storage module inside the chip, for example, a register or a cache, or may be a storage module (for example, a read-only memory or a random access memory) of the chip.

According to a twenty-second aspect, an embodiment of this application provides a computer program or a computer program product, including code or instructions. When the code or the instructions is/are run on a computer, the computer is enabled to perform the method according to any one of the first aspect or the possible implementations of the first aspect.

According to a twenty-third aspect, an embodiment of this application provides a computer program or a computer program product, including code or instructions. When the code or the instructions is/are run on a computer, the computer is enabled to perform the method according to any one of the second aspect or the possible implementations of the second aspect.

According to a twenty-fourth aspect, an embodiment of this application provides a computer program or a computer program product, including code or instructions. When the code or the instructions is/are run on a computer, the computer is enabled to perform the method according to any one of the third aspect or the possible implementations of the third aspect.

According to a twenty-fifth aspect, an embodiment of this application provides a computer program or a computer program product, including code or instructions. When the code or the instructions is/are run on a computer, the computer is enabled to perform the method according to any one of the fourth aspect or the possible implementations of the fourth aspect.

### BRIEF DESCRIPTION OF DRAWINGS

FIG. 1 is a schematic diagram of interaction between an agent and an environment;
FIG. 2 is a schematic diagram of a Markov decision process;
FIG. 3a is a schematic diagram of a network architecture according to an embodiment of this application;
FIG. 3b is a schematic diagram of a 5G RAN architecture according to an embodiment of this application;
FIG. 4 is a schematic diagram of a RAN architecture according to an embodiment of this application;
FIG. 5 is a schematic flowchart of an information processing method according to an embodiment of this application;
FIG. 6A and FIG. 6B are a flowchart of information processing when a terminal device has no AI capability according to an embodiment of this application;
FIG. 7 is a schematic flowchart of another information processing method according to an embodiment of this application;
FIG. 8A and FIG. 8B are a flowchart of information processing when a terminal device has an AI inference capability according to an embodiment of this application;
FIG. 9 is a schematic flowchart of another information processing method according to an embodiment of this application;
FIG. 10A and FIG. 10B are a schematic flowchart of federated learning according to an embodiment of this application;
FIG. 11 is a schematic flowchart of AI training according to an embodiment of this application;
FIG. 12 is a schematic flowchart of DRL online learning according to an embodiment of this application;
FIG. 13A, FIG. 13B, and FIG. 13C are a schematic flowchart of a decision early stopping technology according to an embodiment of this application;
FIG. 14 is a schematic diagram of application of deploying a DRL algorithm in a cell according to an embodiment of this application;
FIG. 15 is a schematic diagram of virtual cell assisted training according to an embodiment of this application;
FIG. 16 is a schematic diagram of deploying a training terminal in a real cell according to an embodiment of this application;
FIG. 17 is a schematic diagram of a structure of a first AI entity according to an embodiment of this application;
FIG. 18 is a schematic diagram of a structure of another first AI entity according to an embodiment of this application;
FIG. 19 is a schematic diagram of a structure of another first AI entity according to an embodiment of this application;
FIG. 20 is a schematic diagram of a structure of another first AI entity according to an embodiment of this application;
FIG. 21 is a schematic diagram of a structure of a terminal device according to an embodiment of this application;
FIG. 22 is a schematic diagram of a structure of another terminal device according to an embodiment of this application;
FIG. 23 is a schematic diagram of a structure of another terminal device according to an embodiment of this application; and
FIG. 24 is a schematic diagram of a structure of another terminal device according to an embodiment of this application.

### DESCRIPTION OF EMBODIMENTS

The following describes technical solutions in embodiments of this application with reference to the accompanying drawings in embodiments of this application.

Before embodiments of this application are described, related concepts are first described.

An artificial intelligence (AI) technology is successfully applied in the field of image processing and natural language processing. Currently, academia conducts a lot of research on applying the AI technology to a network layer (such as network optimization, mobility management, and resource allocation) and a physical layer (such as channel coding/decoding, channel prediction, and a receiving device).

The artificial intelligence (artificial intelligence, AI) technology is successfully applied in the field of image processing and natural language processing. For example, the AI technology is applied to a network layer (such as network optimization, mobility management, and resource allocation), or the AI technology is applied to a physical layer (such as channel coding/decoding, channel prediction, and a receiving device). Common AI technologies include supervised learning, reinforcement learning, and the like.

Supervised learning refers to a process of adjusting a parameter of a classifier by using a group of samples of a known category, so that the classifier achieves required performance, and is also referred to as supervised training. A goal of supervised learning is to establish a training set and learn a mapping relationship between input and output in the training set. The training set is a set of correct mapping relationships between input and output. A supervised learning method is a machine learning method that is widely studied currently. For example, the supervised learning method includes a neural network propagation algorithm, a decision tree learning algorithm, and the like.

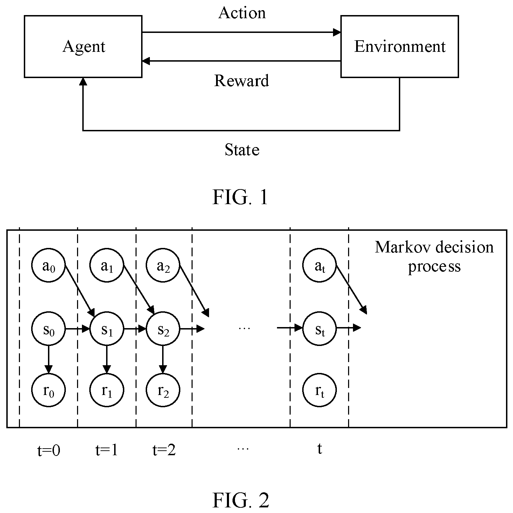

Reinforcement learning is interactive learning between an agent (agent) and an environment (environment). FIG. 1 is a schematic diagram of interaction between an agent and an environment. The agent may perform an action (action) on the environment based on a state (state) fed back by the environment, to obtain a reward (reward) and a state at a next moment, so that the agent can accumulate a maximum reward in a period of time.

Different from supervised learning, reinforcement learning does not require a training set. In reinforcement learning, a reinforcement signal (usually a scalar signal) provided by the environment evaluates quality of an action, rather than telling the reinforcement learning system how to perform a correct action. As the external environment provides little information, the agent needs to rely on its own experience for learning. In this way, the agent gains knowledge in an action-evaluation environment and improve action plans to adapt to the environment.

Common reinforcement learning algorithms include Q-learning (Q-learning), policy gradient (policy gradient), actor-critic (actor-critic), and the like. For example, a currently commonly used reinforcement learning algorithm is deep reinforcement learning (deep reinforcement learning, DRL). Deep reinforcement learning mainly combines reinforcement learning with deep learning, and uses a neural network to model a policy/value function, to adapt to a larger input/output dimension.

In an AI technology, a plurality of mathematical models may be usually used for inference, to obtain an AI decision. The mathematical model may include but is not limited to a model such as a Markov decision process or a neural network. For example, FIG. 2 is a schematic diagram of a Markov decision process (Markov decision processes, MDP). The Markov decision process is a mathematical model for analyzing a decision-making problem. It is assumed that an environment has a Markov property (a conditional probability distribution of a future state of the environment depends on only a current state). A decision maker periodically observes a state of the environment (for example, s₀ and s₁ in FIG. 2), makes a decision based on the state of the current environment (for example, a₀ and a₁ in FIG. 2), and obtains a new state and a reward (for example, r₀ and r₁ in FIG. 2) after interacting with the environment, as shown in FIG. 2.

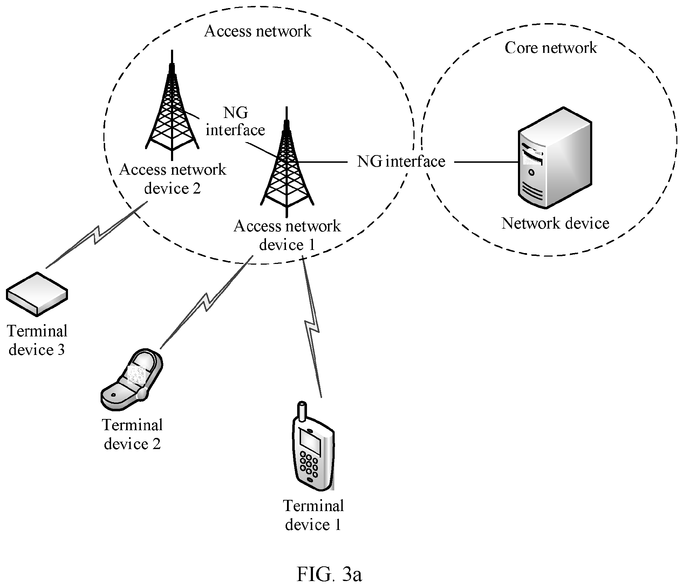

With the evolution of future mobile communication network technologies, a new radio access technology (new radio access technology, NR) redefines an architecture of an access network. FIG. 3a is a schematic diagram of a network system according to an embodiment of this application. The network system includes a core network (a 5GC), an access network (an NG-RAN), and a terminal device. The 5GC interacts information with the NG-RAN through an NG interface. An access network device (for example, a gNB) in the NG-RAN may interact information through an Xn interface. The terminal device may be connected to the access network device through a radio link, to exchange information between the terminal device and the access network device.

The network system may include but is not limited to: a global system for mobile communication (global system for mobile communications, GSM); a wideband code division multiple access (wideband code division multiple access, WCDMA) system; a long term evolution (long term evolution, LTE) system; an enhanced mobile broadband (enhanced mobile broadband, eMBB) scenario, an ultra-reliable low-latency communication (ultra-reliable low latency communications, uRLLC) scenario, and massive machine type communication (massive machine type communications, mMTC) scenario in a next generation radio access technology (new radio access technology, NR); a narrowband internet of things (narrow band-internet of things, NB-IoT) system; and the like.

The access network device may be any device having a wireless transceiver function, and provides a wireless communication service for a terminal device in a coverage area. The access network device may include but is not limited to: an evolved NodeB (NodeB or eNB or e-NodeB, evolutional NodeB) in a long term evolution (long term evolution, LTE) system, a base station (gNodeB or gNB) or a transmission reception point (transmission receiving point/transmission reception point, TRP) in a next generation radio access technology (new radio access technology, NR), a base station that subsequently evolves in 3GPP, an access node in a Wi-Fi system, a wireless relay node, a wireless backhaul node, a device that provides a base station function in internet of vehicles, D2D communication, and machine-to-machine communication, a satellite, and the like.

The terminal device may be a device having a wireless transceiver function, or the terminal device may be a chip. The terminal device may be user equipment (user equipment, UE), a mobile phone (mobile phone), a tablet computer (Pad), a computer with a wireless transceiver function, a virtual reality (virtual reality, VR) terminal device, an augmented reality (augmented reality, AR) terminal device, a vehicle-mounted terminal device, a wireless terminal in remote medical (remote medical), a wireless terminal in a smart grid (smart grid), a wearable terminal device, internet of vehicles, D2D communication, a terminal in machine-to-machine communication, or the like.

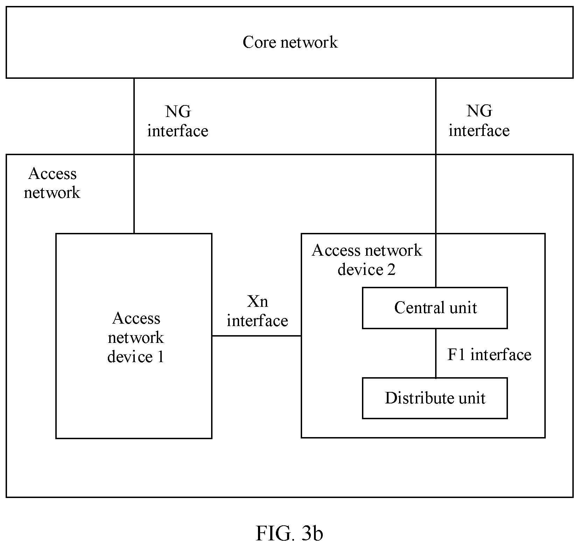

Optionally, FIG. 3b is a schematic diagram of a 5G RAN architecture according to an embodiment of this application. An access network device (for example, a gNB) in the NG RAN may include a central unit (central unit, CU) and a distribute unit (distribute unit). The CU and the DU may interact information through an F1 interface, as shown in FIG. 3b.

It can be seen that increasingly mature AI technologies will play an important role in promoting the evolution of future mobile communication network technologies. For example, an AI entity may be deployed in an access network to improve a processing capability of the access network (for example, improve resource allocation efficiency). However, currently, a basic interaction mode between the AI entity in the access network and user equipment (user equipment, UE) is not defined, and the AI technology cannot be efficiently applied to a radio access network.

Embodiments of this application provide an information processing method. In the information processing method, an AI technology may be applied to a radio access network, to help improve a processing capability of the radio access network.

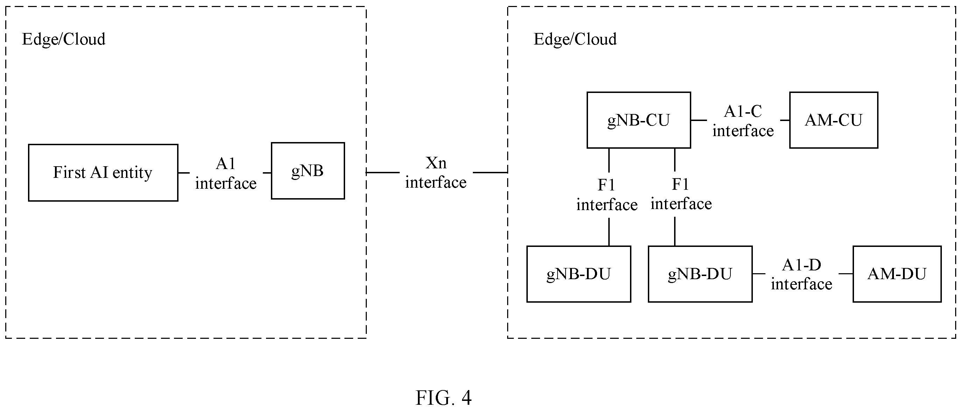

The information processing method may be applied to a RAN architecture provided in embodiments of this application. FIG. 4 is a RAN architecture according to an embodiment of this application. As shown in FIG. 4, a first AI entity (AI module) is added to the RAN architecture, and it is defined that the first AI entity and a gNB may interact information through an A1 interface. It should be noted that the first AI entity described in this embodiment may be located in an edge/cloud access network. This helps implement a corresponding AI function by using edge computing/cloud computing.

Optionally, the first AI entity may be further split into a first AI entity-central unit (AM-CU) and a first AI entity-distribute unit (AM-DU). Alternatively, the gNB may be physically split into a gNB-CU and a gNB-DU. As shown in FIG. 4, information interaction between the AM-CU and the gNB-CU through an A1-C interface is defined, and information interaction between the AM-DU and the gNB-DU through an A1-D interface is defined.

Communication content of the AI interface may include but is not limited to: uploading/downloading of an AI model, uploading/downloading of data, information interaction between the gNB and the first AI entity (for example, a performance tracking module in the first AI entity may monitor performance data of the gNB), and the like. Optionally, the A1 interface is split into A1-C and A1-D interfaces based on functions, and may correspond to function division of the gNB-CU and the gNB-DU. Communication content of the interfaces is also different. For example, the A1-D interface transmits messages related to a physical layer (physical, PHY), a medium access control (media access control, MAC) layer, and a radio link control (radio link control, RLC) layer; and the A1-C interface transmits messages related to a higher layer (for example, a packet data convergence protocol (packet data convergence protocol, PDCP) layer).

The following provides descriptions with reference to specific embodiments.

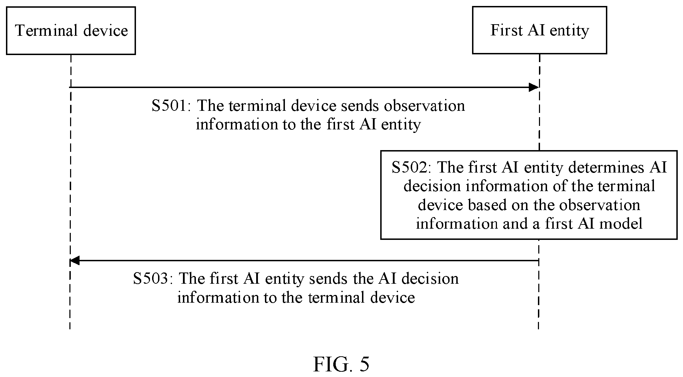

FIG. 5 is a schematic flowchart of an information processing method according to an embodiment of this application. A procedure of the information processing method in FIG. 5 is implemented through interaction between a first AI entity and a terminal device, and may include the following steps.

S501: The terminal device sends observation information to the first AI entity, and correspondingly the first AI entity receives the observation information sent by the terminal device.

S502: The first AI entity determines AI decision information of the terminal device based on the observation information and a first AI model.

S503: The first AI entity sends the AI decision information to the terminal device, and correspondingly the terminal device receives the AI decision information sent by the first AI entity.

This embodiment defines a basic interaction mode between the first AI entity and the terminal device when the terminal device has no AI capability. Whether the terminal device has an AI capability may be indicated by using AI information of the terminal device. The AI information of the terminal device may include but is not limited to the following parameters: an AI capability parameter (AICapabilityClass), an AI update parameter (AIUpdateType), an AI interaction parameter (AIInteractionType), and the like.

The AI capability parameter indicates whether the terminal device has the AI capability. Specifically, the AI capability parameter may indicate, by using a specific parameter value, whether the terminal device has the AI capability.

For example, when a parameter value of AICapabilityClass is class 0, it indicates that the terminal device has no AI capability. In other words, the terminal device does not have an AI inference capability and/or an AI training capability, that is, the terminal device cannot implement an AI function.

For another example, when a parameter value of AICapabilityClass is class 1, it indicates that the terminal device has the AI inference capability. In other words, the terminal device may implement a part of AI functions, for example, obtain an AI decision.

For another example, when a parameter value of AICapabilityClass is class 2, it indicates that the terminal device has the AI training capability. In other words, the terminal device may implement a part of AI functions, for example, train an AI model, to obtain a better AI model.

For another example, when a parameter value of AICapabilityClass is class 3, it indicates that the terminal device has the AI inference capability and the AI training capability. In other words, the terminal device may implement an AI function, for example, train an AI model, to obtain a better AI model and a better AI decision.

It should be noted that the foregoing parameter value of AICapabilityClass is merely an example, and the parameter value of AICapabilityClass may alternatively be in another form, for example, represented by using a binary number. This is not limited in this embodiment.

The AI update parameter indicates whether the terminal device performs AI update. AI update refers to updating data. For example, if a used AI algorithm is a reinforcement learning algorithm, the terminal device may send feedback information to the first AI entity, so that the first AI entity updates data. Specifically, the AI update parameter may also indicate, by using a specific parameter value, whether AI update is performed.

For example, when a parameter value of AIUpdateType is type 0, it indicates that AI update is not performed.

For another example, when a parameter value of AIUpdateType is type 1, it indicates that AI update is triggered by an event. In other words, in a case of being triggered by an external event, for example, an AI model is not adapted due to an environment change, AI update may be triggered by a long-term KPI deterioration event.

For another example, when a parameter value of AIUpdateType is type 2, it indicates that AI update is triggered periodically. For example, a system may set a time parameter, and the time parameter may indicate that the system triggers AI update at an interval of a preset time period.

It should be noted that the foregoing parameter value of AIUpdateType is merely an example, and the parameter value of AIUpdateType may alternatively be in another form, for example, represented by using a binary number. This is not limited in this embodiment.

The AI interaction parameter indicates content of interaction between the terminal device and the first AI entity. The content of interaction between the terminal device and the first AI entity in this embodiment may include but is not limited to data, a model, and the like.

The data for interaction between the terminal device and the first AI entity is data used for AI inference and/or AI training, and may include but is not limited to status information, observation information, and the like.

For example, when the first AI entity uses a reinforcement learning algorithm, the status information may be a state fed back by an environment in the reinforcement learning algorithm shown in FIG. 1. The model for interaction between the terminal device and the first AI entity is a model used for AI inference and/or AI training. Different AI models correspond to AI algorithms used by the first AI entity. This is not limited in this embodiment.

Specifically, the AI interaction parameter may indicate the content of interaction between the terminal device and the first AI entity by using a specific parameter value.

For example, when a parameter value of AIInteractionType is type 0, it indicates that the content of interaction between the terminal device and the first AI entity includes data uploading and/or data downloading.

For another example, when a parameter value of AIInteractionType is type 1, it indicates that the content of interaction between the terminal device and the first AI entity includes data uploading and/or model downloading.

For another example, when a parameter value of AIInteractionType is type 2, it indicates that the content of interaction between the terminal device and the first AI entity includes model uploading and/or model downloading.

It should be noted that the foregoing parameter value of AIInteractionType is merely an example, and the parameter value of AIInteractionType may alternatively be in another form, for example, represented by using a binary number. This is not limited in this embodiment.

Optionally, before the terminal device sends the observation information to the first AI entity, the terminal device may send the AI information of the terminal device to the first AI entity. The AI information of the terminal device may include one or more of the AI capability parameter, the AI update parameter, or the AI interaction parameter described in the foregoing embodiment.

For example, after the terminal device establishes a communication connection to the first AI entity, the terminal device may send a service request message (for example, a resource allocation request message) to the first AI entity. The service request message may carry the AI information of the terminal device, so that the first AI entity knows whether the terminal device has the AI capability.

The first AI entity is a newly added entity in an access network, and the first AI entity has AI functions such as AI inference and AI training. Specifically, the first AI entity may be divided into a plurality of functional modules based on functions, including modules such as an intelligent decision module (intelligent policy function, IPF), a data collection and training module (data and training function, DTF), a preprocessing module (pre-processing function, PPF), and a performance tracking module (performance monitoring function, PMF). The modules are separately configured to perform corresponding functions.

Optionally, in S501 in this embodiment, the terminal device sending the observation information to the first AI entity may be that the terminal device sends the observation information to the preprocessing module of the first AI entity.

The observation information indicates data used for AI decision. That is, the observation information is data provided for AI decision. For example, when the terminal device requests resource scheduling from the access network, the observation information sent by the terminal device to the preprocessing module may include data such as a throughput of the terminal device.

Optionally, in S502 in this embodiment, the first AI entity determining the AI decision information of the terminal device based on the observation information and the first AI model may be performed by the intelligent decision module of the first AI entity.

The first AI model is a model that is in the first AI entity and that performs AI inference and/or AI training. In other words, the first AI model is an edge/cloud AI model. The first AI model may include a plurality of types based on different AI algorithms used. For example, when the used AI algorithm is deep reinforcement learning, the first AI model may be a fully connected neural network model.

Optionally, S502 in this embodiment may alternatively be separately performed by the preprocessing module and the intelligent decision module of the first AI entity, and includes the following two steps:

The preprocessing module preprocesses the observation information to obtain corresponding status information.

The intelligent decision module inputs the status information into the first AI model for inference, to obtain the AI decision information of the terminal device.

Because the first AI model cannot directly process the observation information, the preprocessing module may first preprocess the observation information (for example, perform normalization processing on data), to obtain the status information.

The status information is data that can be directly used when inference is performed by using an AI model. For example, the status information may be a system state (such as s₀ and s₁) in the Markov decision process shown in FIG. 2, or may be preprocessed data (a state in a hidden Markov model cannot be directly obtained).

The intelligent decision module may input the status information into the first AI model for inference. For example, when the first AI entity uses a reinforcement learning algorithm, the intelligent decision module may be the agent in the reinforcement learning algorithm shown in FIG. 1, and may perform an action on an environment, that is, obtain the AI decision information of the terminal device.

The AI decision information of the terminal device is a result obtained by the first AI entity by performing AI inference based on the data used for AI decision.

For example, when the first AI entity uses a reinforcement learning algorithm, the AI decision information is an action output by an agent. Specifically, when the terminal device requests resource scheduling from the access network, a resource allocation result obtained by the first AI entity by performing AI inference is the AI decision information of the terminal device.

It should be noted that, compared with a conventional resource allocation method, the first AI entity applies the AI technology to resource allocation in the access network, so that a resource can be specifically allocated to a corresponding terminal device. This helps optimize overall network performance.

Optionally, in S503 in this embodiment, the first AI entity sending the AI decision information to the terminal device may be that the intelligent decision module of the first AI entity sends the AI decision information to the terminal device.

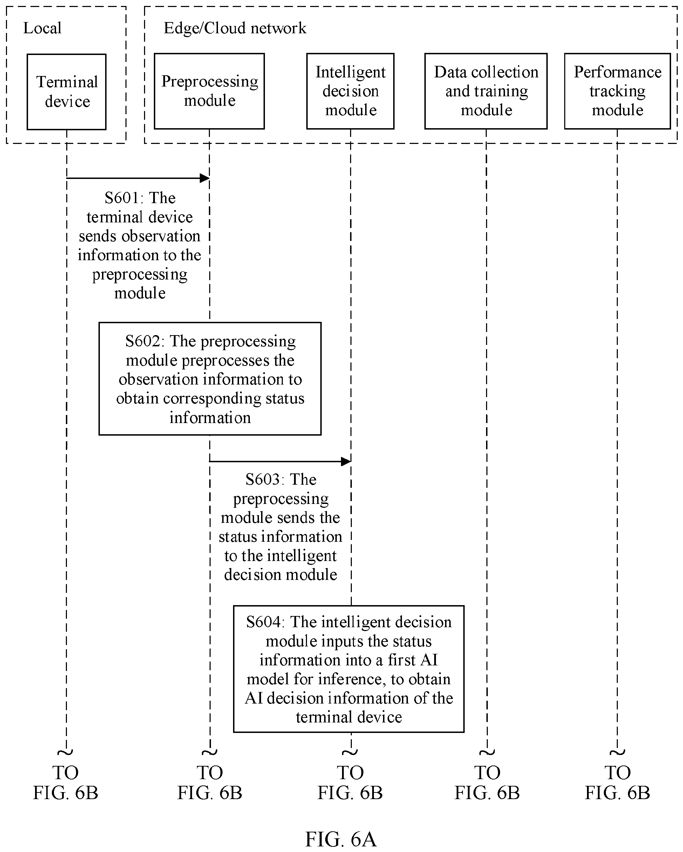

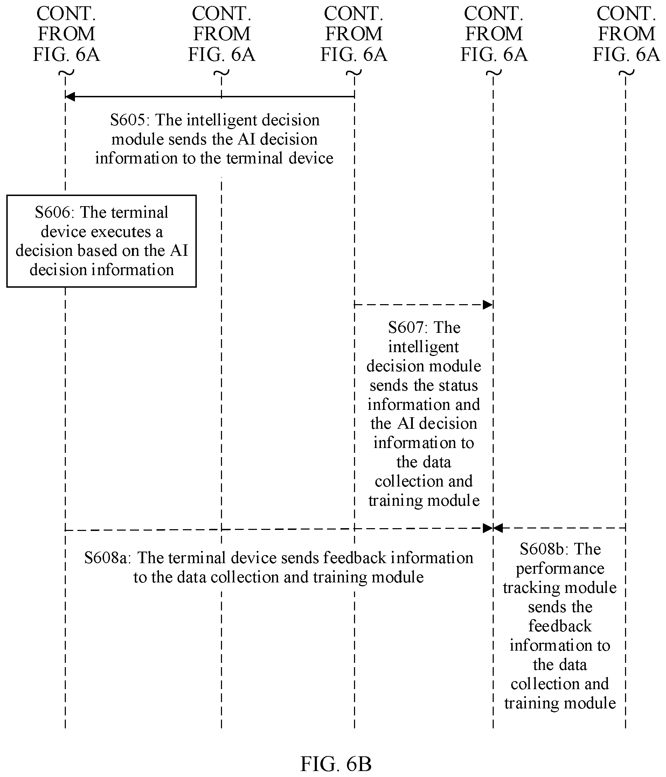

Optionally, FIG. 6A and FIG. 6B are a flowchart of information processing when a terminal device has no AI capability according to an embodiment of this application. Because the terminal device has no AI capability, the terminal device may choose to request an AI decision from an edge/cloud first AI entity.

It should be noted that a delay of obtaining the AI decision by the terminal device by using the information processing method shown in FIG. 6A and FIG. 6B is long, and the method is applicable to a delay-insensitive service.

S601: The terminal device sends observation information to a preprocessing module. The observation information indicates data used for AI decision. Correspondingly, the preprocessing module receives the observation information sent by the terminal device.

S602: The preprocessing module preprocesses the observation information to obtain corresponding status information.

S603: The preprocessing module sends the status information to an intelligent decision module. Correspondingly, the intelligent decision module receives the status information sent by the preprocessing module.

S604: The intelligent decision module inputs the status information into a first AI model for inference, to obtain AI decision information of the terminal device.

S605: The intelligent decision module sends the AI decision information to the terminal device. Correspondingly, the terminal device receives the AI decision information sent by the intelligent decision module.

S606: The terminal device executes a decision based on the AI decision information.

S601 to S606 are an overall processing procedure when a parameter value of AIUpdateType of the terminal device is type 0. Optionally, when a parameter value of AIUpdateType is type 1 or type 2, the information processing procedure shown in FIG. 6A and FIG. 6B further includes an AI training data collection process, including the following steps:

S607: The intelligent decision module sends the status information and the AI decision information to a data collection and training module.

S608: The data collection and training module receives feedback information.

The feedback information indicates data used for AI training. The feedback information received by the data collection and training module varies based on different AI algorithms.

For example, if the AI algorithm used by the first AI entity is reinforcement learning, the data collection and training module receives reward information sent by the terminal device or a performance tracking module. In this case, S608 may include two parallel steps S608a and S608b. S608a is that the terminal device sends the feedback information to the data collection and training module. S608b is that the performance tracking module sends the feedback information to the data collection and training module.

For another example, if the AI algorithm used by the first AI entity is supervised learning, the data collection and training module receives label information sent by the terminal device.

It should be noted that there is no sequence for performing S607 and S606, that is, S606 and S607 may be simultaneously performed.

An embodiment of this application provides an information processing method. The method defines a basic interaction mode between the first AI entity and the terminal device. When the terminal device has no AI capability, the terminal device may implement an AI function by using the first AI entity in an access network, to obtain the AI decision information of the terminal device. In other words, the first AI entity in the access network applies an AI technology to a radio access network. This helps improve a processing capability of the radio access network.

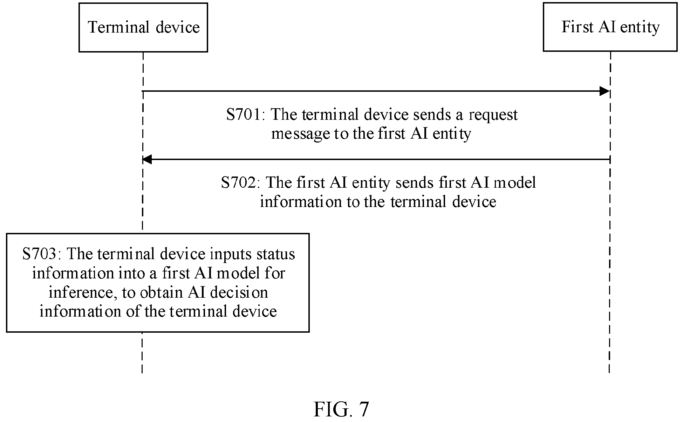

FIG. 7 is a schematic flowchart of another information processing method according to an embodiment of this application. A procedure of the information processing method in FIG. 7 is implemented through interaction between a first AI entity and a terminal device, and may include the following steps.

S701: The terminal device sends a request message to the first AI entity. Correspondingly, the first AI entity receives the request message sent by the terminal device.

S702: The first AI entity sends first AI model information to the terminal device. Correspondingly, the terminal device receives the first AI model information sent by the first AI entity.

S703: The terminal device inputs status information into a first AI model for inference, to obtain AI decision information of the terminal device.

This embodiment defines a basic interaction mode between the first AI entity and the terminal device when the terminal device has an AI inference capability. In other words, when a parameter value of AICapabilityClass of the terminal device is class 1, the terminal device may implement AI inference, and obtain an AI decision.

Because the terminal device has only the AI inference capability but does not have an AI training capability, the terminal device needs to send the request message to the first AI entity to obtain the AI model. The request message requests the first AI model information from the first AI entity. The first AI model information may be the first AI model, or may be a related parameter of the first AI model.

For example, when the first AI model is a neural network, the first AI model information may be an entire neural network, or may be a related parameter of the neural network (for example, a quantity of layers of the neural network or a quantity of neurons).

Optionally, execution of S701 and S702 may be determined based on an AI update parameter of the terminal device. In other words, when a parameter value of AIUpdateType is type 0, S701 and S702 are performed only once during initialization.

When a parameter value of AIUpdateType is type 1, execution of S701 and S702 is triggered based on an event. For example, if a performance tracking module monitors that system performance deteriorates, update is triggered.

When a parameter value of AlUpdateType is type2, S701 and S702 are performed periodically.

Optionally, when the terminal device in this embodiment has the AI inference capability, the terminal device may include a plurality of AI functional modules. For example, the terminal device includes a preprocessing module and an intelligent decision module, configured to implement an AI inference process.

It should be noted that the terminal device may alternatively implement an AI inference function by using a local second AI entity. The local second AI entity is an AI entity that is physically close to the terminal device, and may be an externally-connected device of the terminal device. This is not limited in this embodiment.

The following uses an example in which the terminal device includes the plurality of AI functional modules for description.

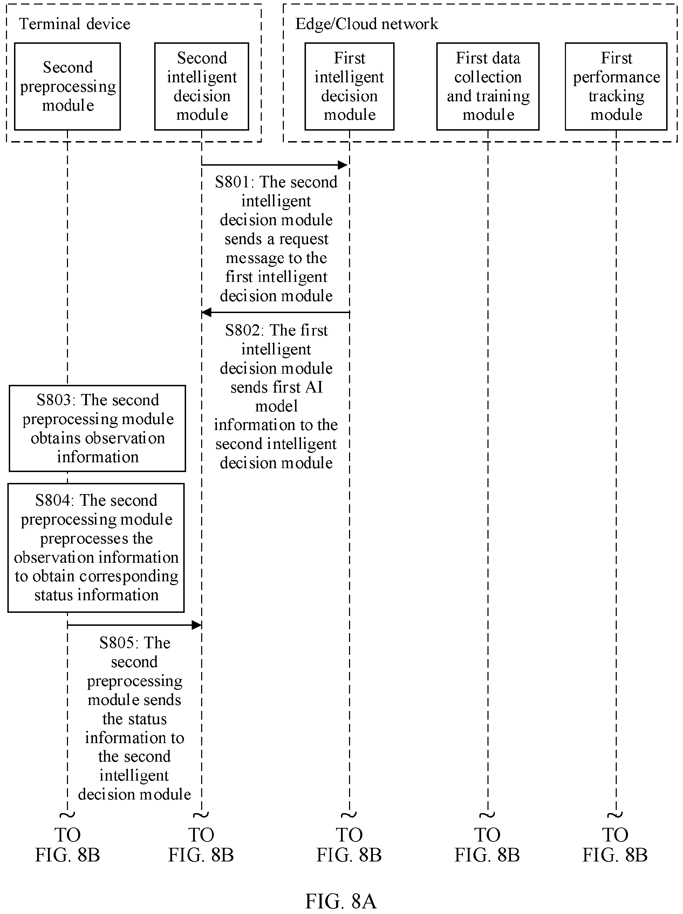

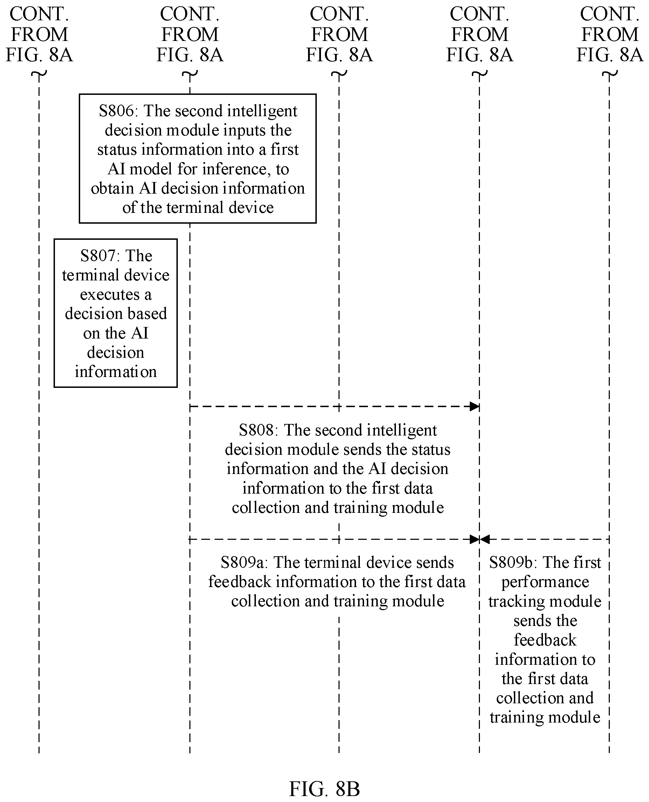

FIG. 8A and FIG. 8B are a flowchart of information processing when a terminal device has a AI inference capability according to an embodiment of this application. The terminal device has the AI inference capability, that is, the terminal device includes at least an intelligent decision module. The terminal device may request first AI model information from an edge/cloud first AI entity, and locally complete AI inference to obtain AI decision information.

It should be noted that a delay of obtaining the AI decision information by the terminal device by using the information processing method shown in FIG. 8A and FIG. 8B is short, and the method is applicable to a delay-sensitive service.

For ease of description, AI functional modules included in the terminal device in the embodiment shown in FIG. 8A and FIG. 8B are separately referred to as second modules. For example, an intelligent decision module of the terminal device is referred to as a second intelligent decision module. AI functional modules included in the first AI entity in the embodiment shown in FIG. 8A and FIG. 8B are separately referred to as first modules. For example, an intelligent decision module of the first AI entity is referred to as a first intelligent decision module. The information processing procedure may include the following steps:

S801: The second intelligent decision module sends a request message to the first intelligent decision module. Correspondingly, the first intelligent decision module receives the request message sent by the second intelligent decision module.

S802: The first intelligent decision module sends the first AI model information to the second intelligent decision module. Correspondingly, the second intelligent decision module receives the first AI model information sent by the first intelligent decision module.

S803: A second preprocessing module obtains observation information.

S804: The second preprocessing module preprocesses the observation information to obtain corresponding status information.

S805: The second preprocessing module sends the status information to the second intelligent decision module. Correspondingly, the second intelligent decision module receives the status information sent by the second preprocessing module.

S806: The second intelligent decision module inputs the status information into a first AI model for inference, to obtain the AI decision information of the terminal device.

S807: The terminal device executes a decision based on the AI decision information.

S801 to S807 are an overall processing procedure when a parameter value of AIUpdateType of the terminal device is type 0. Optionally, when a parameter value of AIUpdateType is type 1 or type 2, the information processing procedure shown in FIG. 8A and FIG. 8B further includes an AI training data collection process, including the following steps:

S808: The second intelligent decision module sends the status information and the AI decision information to a first data collection and training module.

S809: The first data collection and training module receives feedback information.

The feedback information indicates data used for AI training. The feedback information received by the data collection and training module varies based on different AI algorithms.

For example, if the AI algorithm used by the first AI entity is reinforcement learning, the first data collection and training module receives reward information sent by the terminal device or a performance tracking module. In this case, S809 may include two parallel steps S809a and S809b. S809a is that the terminal device sends the feedback information to the first data collection and training module. S809b is that the first performance tracking module sends the feedback information to the first data collection and training module.

For another example, if the AI algorithm used by the first AI entity is supervised learning, the first data collection and training module receives label information sent by the terminal device. In this case, S809 is that the first data collection and training module receives the label information sent by the terminal device.

It should be noted that there is no sequence for performing S807 and S808, that is, S807 and S808 may be simultaneously performed.

Optionally, when a local second AI entity is an externally-connected device of the terminal device, after S806, the foregoing processing procedure may further include the following steps:

S8071: The second intelligent decision module sends the AI decision information of the terminal device to the terminal device.

S808a: The terminal device executes a decision based on the AI decision information.

S8071 indicates that this step is performed after S806, and replaces the original S807. S808a indicates that there is no sequence for performing this step and S808, that is, S808a and S808 may be simultaneously performed.

The following uses a specific example to describe in detail a procedure of interaction between the terminal device and the first AI entity in FIG. 8A and FIG. 8B and information for interaction between the terminal device and the first AI entity. An AI function implemented by the terminal device in this example is performing channel decoding by using AI. S801 to S809 may specifically include the following steps:
The second intelligent decision module sends a request message to the first intelligent decision module, where the request message requests a channel decoding model;
The first intelligent decision module sends channel decoding model information to the second intelligent decision module;
The second intelligent decision module determines the channel decoding model of the terminal device based on the channel decoding model information;
The second preprocessing module receives a signal, where the signal is to-be-decoded data;
The second preprocessing module preprocesses the signal to obtain a log-likelihood ratio of the signal;
The second preprocessing module sends the log-likelihood ratio of the signal to the second intelligent decision module;
The second intelligent decision module inputs the log-likelihood ratio of the signal into the channel decoding model of the terminal device for inference, to obtain decoded data of the signal; and
The terminal device uses the decoded data of the signal.

Optionally, when a parameter value of AIUpdateType of the terminal device is type 1 or type 2, the method further includes the following steps:
The second intelligent decision module sends the log-likelihood ratio of the signal and the decoded data of the signal to the first data collection and training module; and
The first data collection and training module receives label information, where the label information includes correct decoded data; or the first data collection and training module receives reward information, where the reward information is 1 when decoding is correct, and the reward information is 0 when decoding fails.

An embodiment of this application provides an information processing method. The method defines another basic interaction mode between the first AI entity and the terminal device. When the terminal device has the AI inference capability, the terminal device may perform inference based on the first AI model to obtain the AI decision information of the terminal device, to implement a corresponding AI function.

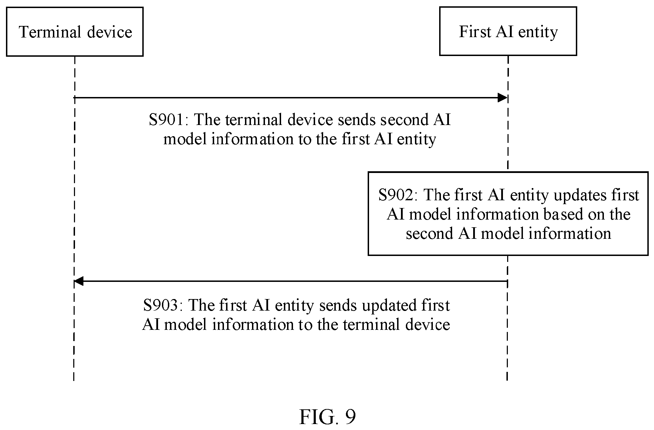

FIG. 9 is a schematic flowchart of another information processing method according to an embodiment of this application. A procedure of the information processing method in FIG. 9 is implemented through interaction between a first AI entity and a terminal device, and may include the following steps.

S901: The terminal device sends second AI model information to the first AI entity. Correspondingly, the first AI entity receives the second AI model information sent by the terminal device.

S902: The first AI entity updates first AI model information based on the second AI model information.

S903: The first AI entity sends updated first AI model information to the terminal device. Correspondingly, the terminal device receives the updated first AI model information sent by the first AI entity.

This embodiment defines a basic interaction mode between the first AI entity and the terminal device when the terminal device has an AI training capability. In other words, when a parameter value of AICapabilityClass of the terminal device is class 2, the terminal device may train an AI model.

The second AI model information is AI model information in the terminal device or a second AI entity. Similar to the first AI model information, the second AI model information may be an second AI model, or may be a related parameter of the second AI model. This is not limited in this embodiment.

A first AI model and/or the second AI model are/is obtained by training a corresponding first data collection and training module and/or a corresponding second data collection and training module. For example, when the first AI model and/or the second AI model use/uses a neural network, the first AI model and/or the second AI model may be trained in a training manner of the neural network.

For example, the data collection and training module may randomly initialize a neural network, and each training is a process of obtaining a new neural network from a weight matrix and a bias vector of a random neuron by using existing data. In a training process, a loss function (loss function) may be used to evaluate an output result of the neural network, and an error is backpropagated. Iterative optimization may be performed by using a gradient descent method, until the loss function reaches a minimum value. In other words, the data collection and training module may train the AI model by using the foregoing iterative optimization process, to obtain a better AI model.

Optionally, the second AI model information does not include user data of the terminal device. In other words, the second AI model information sent by the terminal device to the first AI entity is irrelevant to data of the terminal device. This facilitates privacy protection of the terminal device.

Optionally, the second AI model information may alternatively include user data of the terminal device, so that a trained AI model is better. This helps obtain more applicable AI decision information.

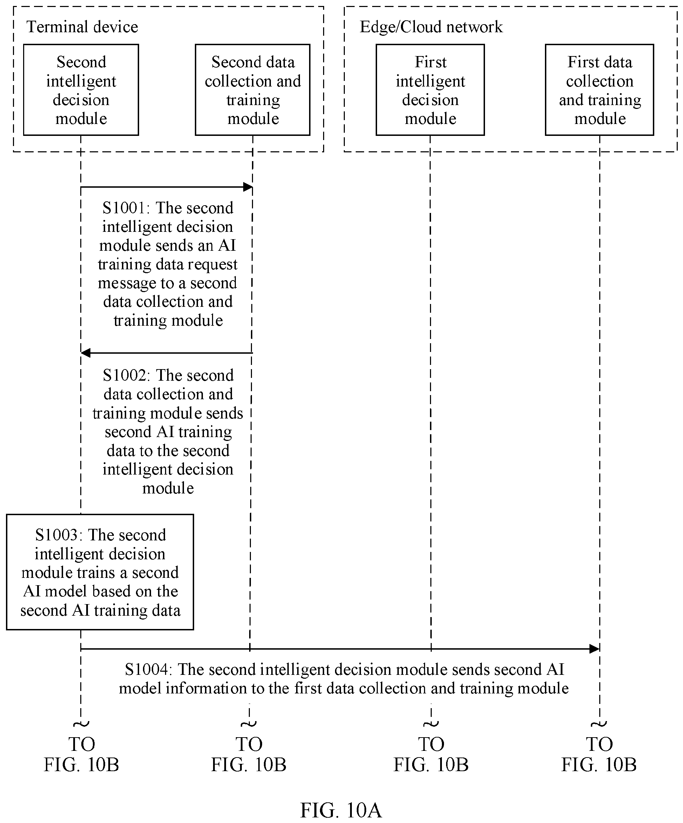

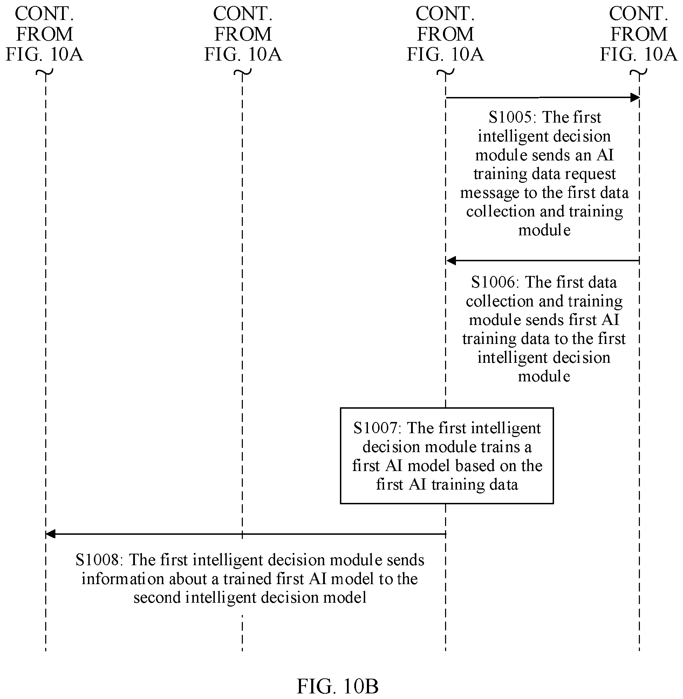

In an example, FIG. 10A and FIG. 10B are a schematic flowchart of federated learning according to an embodiment of this application. The federated learning procedure shown in FIG. 10A and FIG. 10B is an example of a specific application of a basic interaction mode between a first AI entity and a terminal device when the terminal device has an AI training capability. The federated learning procedure includes the following steps:
S1001: A second intelligent decision module sends an AI training data request message to a second data collection and training module.

S1002: The second data collection and training module sends second AI training data to the second intelligent decision module.

S1003: The second intelligent decision module trains a second AI model based on the second AI training data.

S1004: The second intelligent decision module sends second AI model information to a first data collection and training module.

S1005: A first intelligent decision module sends an AI training data request message to the first data collection and training module.

S1006: The first data collection and training module sends first AI training data to the first intelligent decision module.

S1007: The first intelligent decision module trains a first AI model based on the first AI training data.

S1008: The first intelligent decision module sends information about a trained first AI model to the second intelligent decision module.

The first AI training data is AI training data in the first AI entity, and the second AI training data is AI training data in the terminal device. The first AI model is an AI model in the first AI entity, and the second AI model is an AI model in the terminal device.

The step in which the second intelligent decision module sends the second AI model information to the first data collection and training module may be triggered periodically. In other words, one or more local terminal devices may periodically upload one or more pieces of second AI model information to the cloud, and the cloud may store the locally uploaded second AI model information.

After the first AI entity in the cloud trains and updates the first AI model, the first AI entity may deliver the information about the trained first AI model locally. Then, the first AI model is trained and updated locally, and this process is repeated. The loop process may be an infinite loop, or a threshold (for example, a loss function) may be set. When the loss function is less than the threshold, the loop stops, and the federated learning process ends.

In an example, when the terminal device has the AI training capability, the terminal device may also perform local AI training. In other words, the foregoing AI training interaction procedure may be interaction between modules inside the terminal device, and the second AI model information is obtained through AI training.

Similarly, because the first AI entity has an AI training capability, the foregoing AI training interaction procedure may also be interaction between modules inside the first AI entity, and the first AI model information is obtained through AI training.

The following describes in detail an example in which the terminal device performs local training or the first AI entity performs cloud training.

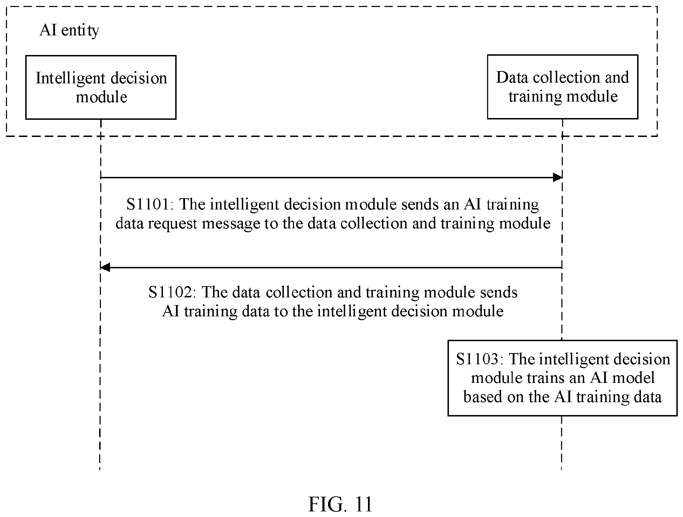

FIG. 11 is a schematic flowchart of AI training according to an embodiment of this application. For ease of description, an intelligent decision module and/or a data collection and training module in FIG. 10A and FIG. 10B may refer to a first/second intelligent decision module and/or a first/second data collection and training module.

Similarly, AI training data and/or an AI model in FIG. 11 may refer to first/second AI training data and/or a first/second AI model.

S1101: An intelligent decision module sends an AI training data request message to a data collection and training module.

S1102: The data collection and training module sends AI training data to the intelligent decision module.

S1103: The intelligent decision module trains an AI model based on the AI training data.

The AI training data may include but is not limited to AI decision information, status information, feedback information, or the like. For example, when the AI training procedure is an AI training procedure inside a terminal device, a second intelligent decision module may update a second AI model based on the status information. For another example, when the AI training procedure is an AI training procedure inside a first AI entity, a first intelligent decision module may update a first AI model based on the AI decision information.

In an example, when the terminal device has an AI inference capability and an AI training capability, the terminal device may implement AI inference and AI training processes by using an internal module. In other words, when a parameter value of AICapabilityClass of the terminal device is class 3, the terminal device may train an AI model, and perform AI inference to obtain the AI decision information.

A process in which the terminal device performs AI inference and AI training is obtained by combining the process in which the terminal device performs AI inference and the process in which the terminal device performs AI training in the foregoing embodiment. For details, refer to the detailed descriptions in embodiments shown in FIG. 8A and FIG. 8B and FIG. 11. Details are not described herein again.

An embodiment of this application provides an information processing method. The method defines another basic interaction mode between the first AI entity and the terminal device. When the terminal device has the AI training capability, the terminal device may train and update the local first AI model, or may interact with the cloud first AI entity to train and update the first AI model, so that the AI model is more applicable to different application scenarios.

Based on the descriptions in the foregoing embodiments, the following describes in detail specific implementations of the information processing method in embodiments of this application when the information processing method is applied to different scenarios.

In an example, it is assumed that an AI algorithm used by the terminal device or the first AI entity is DRL. In DRL, a reward (reward) function of the system can be used as a performance indicator that indicates final convergence of the algorithm. The DRL online learning procedure may be implemented through interaction between the terminal device and the first AI entity, or may be implemented by an internal module of the terminal device that has the AI inference capability and/or the AI training capability.

Implementation of interaction between the terminal device and the first AI entity is used as an example below for detailed description.

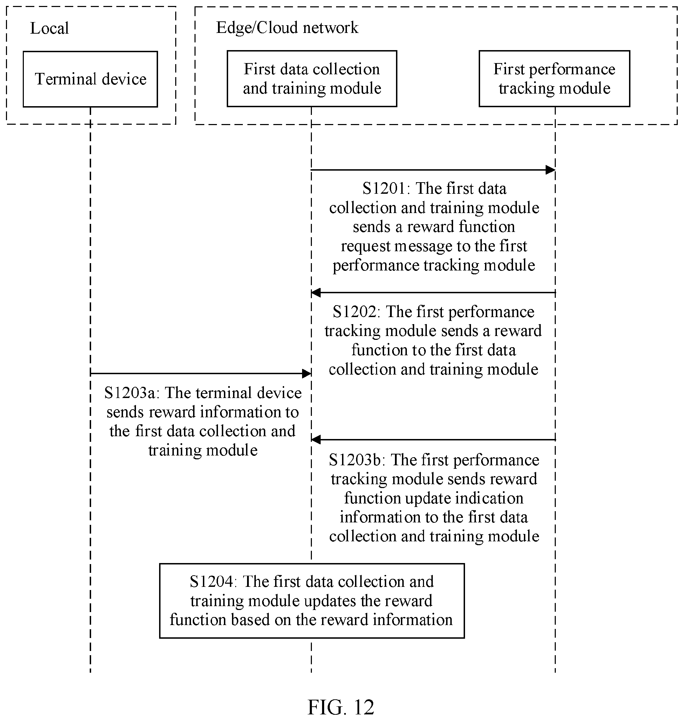

FIG. 12 is a schematic flowchart of DRL online learning according to an embodiment of this application. The DRL online learning procedure includes the following steps:
S1201: A first data collection and training module sends a reward function request message to a first performance tracking module.

S1202: The first performance tracking module sends a reward function to the first data collection and training module.

S1203a: A terminal device sends reward information to the first data collection and training module.

S1203b: The first performance tracking module sends reward function update indication information to the first data collection and training module.

S1204: The first data collection and training module updates the reward function based on the reward information.

The first performance tracking module may monitor a long-term key performance indicator (key performance indicator, KPI) of the system, and the KPI may indicate the first data collection and training module to generate the reward function R (*θ, ϕ*) . R represents a reward, and a target parameter *θ* is performance data obtained by the terminal device by executing AI decision information, for example, a throughput or a packet loss rate. A weight value *ϕ* of the target parameter is determined by a first AI entity based on performance data of one or more terminal devices, and indicates weights of different short-term KPIs. In other words, the weight value *ϕ* of the target parameter may be obtained by the first performance tracking module in the first AI entity by performing long-term monitoring on performance of all terminal devices in the system.

There is no sequence for performing S1203a and S1203b, that is, S1203a and S1203b may be simultaneously performed.

Optionally, S1203b may be performed periodically, or an AI model is not adapted due to factors such as an environment change, and update of the reward function is triggered. For example, in an adaptive process in which deterioration of the long-term KPI triggers the reward function, the first data collection and training module may send the reward function request message to the first performance tracking module, to request update of the reward function.

The following uses a specific example to describe how the system adaptively adjusts the reward function in a DRL scheduling process.

It is assumed that the reward function is *R*(*θ, ϕ*) *= α* × *thp + β × jfi + γ* × *pdr* . The target parameter *θ=*{*thp, jfi, pdr*} includes three types of performance data: a throughput, a fairness parameter, and a packet loss rate. *ϕ=* {*α, β, γ*} includes weights of the three types of performance data. It is assumed that an initial value is *ϕ*={1, 1, 1} . If the PMF detects that fairness deteriorates due to an emergency after the system runs for a period of time, update of the reward function is triggered, and the weights of the three types of performance data are updated to *ϕ*= {1, 2, 1} .

In an example, it is assumed that an AI algorithm used by the terminal device or the first AI entity is DRL. To avoid catastrophic impact on a system caused by exploration in DRL online learning, an embodiment of this application provides a decision early stopping technology. In the decision early stopping technology, system performance may be predicted by using the performance tracking module, and whether a catastrophic performance loss occurs may be determined, to avoid catastrophic impact on the system caused by exploration as early as possible.

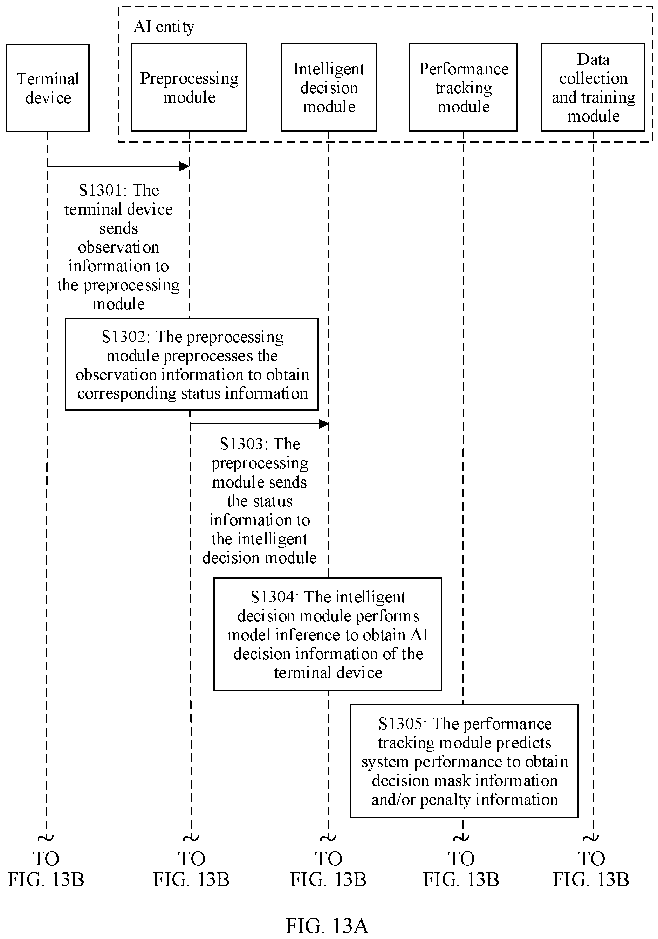

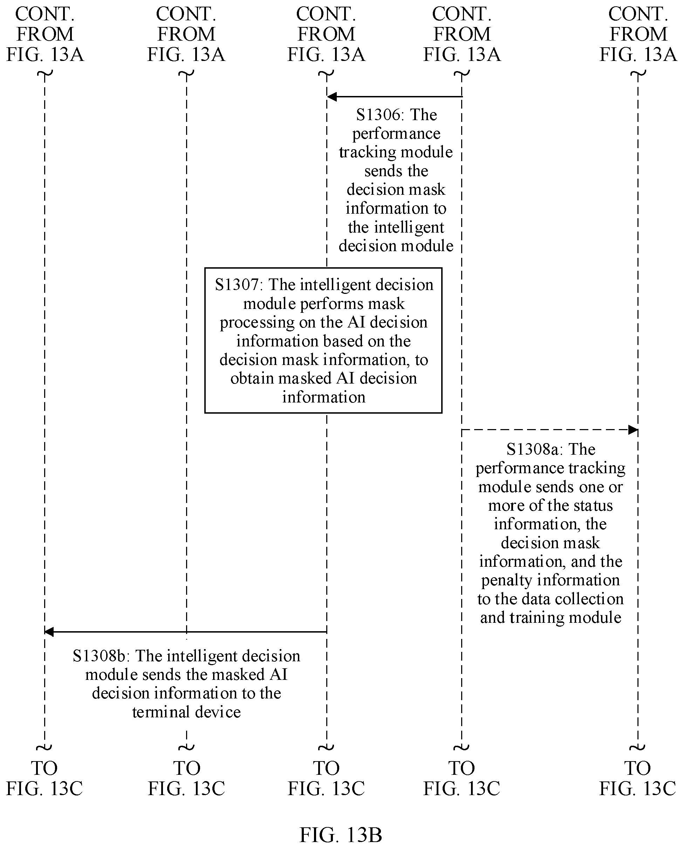

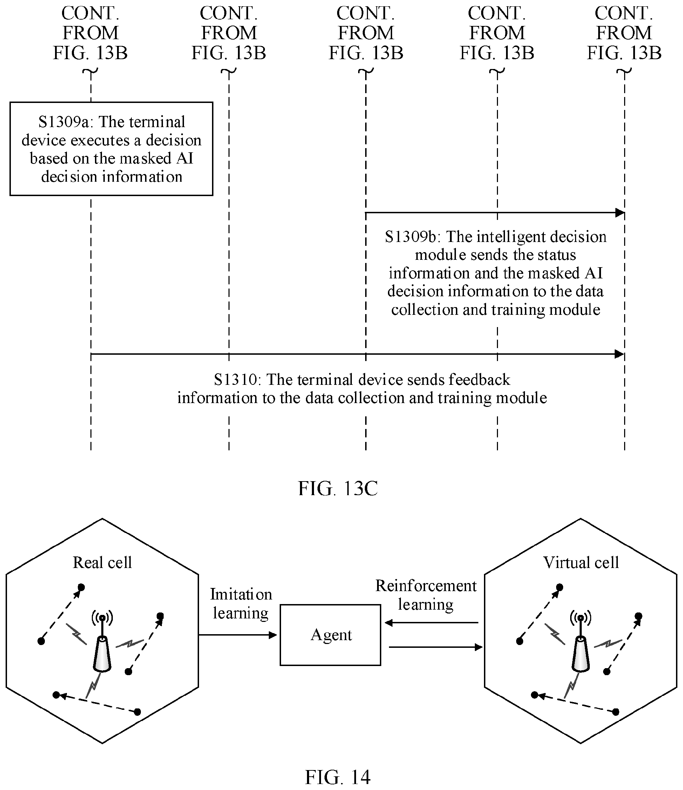

FIG. 13A, FIG. 13B, and FIG. 13C are a schematic flowchart of a decision early stopping technology according to an embodiment of this application. The decision early stopping technology procedure may be implemented through interaction between a terminal device and a first AI entity, or may be implemented by an internal module of the terminal device that has an AI inference capability and/or an AI training capability.

In other words, a plurality of AI functional modules in FIG. 13A, FIG. 13B, and FIG. 13C may be functional modules in the cloud first AI entity, or may be functional modules in a second AI entity inside or externally connected to the local terminal device. This is not limited in this embodiment.

S1301: The terminal device sends observation information to a preprocessing module.

S1302: The preprocessing module preprocesses the observation information to obtain corresponding status information.

S1303: The preprocessing module sends the status information to an intelligent decision module.

S1304: The intelligent decision module performs model inference to obtain AI decision information of the terminal device.

S1305: A performance tracking module predicts system performance to obtain decision mask information and/or penalty information.

S1306: The performance tracking module sends the decision mask information to the intelligent decision module.

S1307: The intelligent decision module performs mask processing on the AI decision information based on the decision mask information, to obtain masked AI decision information.

S1308a: The performance tracking module sends one or more of the status information, the decision mask information, and the penalty information to a data collection and training module.

S1308b: The intelligent decision module sends the masked AI decision information to the terminal device.

S1309a: The terminal device executes a decision based on the masked AI decision information.

S1309b: The intelligent decision module sends the status information and the masked AI decision information to the data collection and training module.

S1310: The terminal device sends feedback information to the data collection and training module.

The performance tracking module needs to have a long-term performance prediction capability. For example, the performance tracking module needs to determine whether catastrophic performance loss occurs based on a current state of a system and a decision made by a model.

Optionally, the decision early stopping technology described in this embodiment may further include a step of model synchronization. In other words, before the terminal device sends the observation information to the preprocessing module, the method may further include the following step: The intelligent decision module sends AI model information to the performance tracking module.

Whether the two steps of model synchronization and S1308a need to be performed depends on a prediction capability of the performance tracking module. In other words, if a prediction capability of the performance tracking module is strong, the two steps of model synchronization and S 1308a are both optional steps.

The decision mask information is used for performing mask processing on the AI decision information. In this way, a part that reduces system performance is processed. For example, if one or more users accessing the system significantly reduce system performance, the performance tracking module may minimize a weight of an AI decision of the one or more users, and the one or more users no longer execute a corresponding AI decision. The decision mask information may be directly obtained based on a prediction result, or may be obtained by using a backup algorithm in the performance tracking module.

Optionally, after performing prediction to obtain the decision mask information and/or the penalty information, the performance tracking module may further use the decision mask information and/or the penalty information as a training sample, and send the training sample to the data collection and training module.

It can be learned that, compared with a solution without decision early stopping, two groups of training samples are obtained through one sampling in the decision early stopping solution in FIG. 13A, FIG. 13B, and FIG. 13C. This improves sampling efficiency of DRL.

The following uses a DRL scheduling process as an example to describe the decision early stopping solution shown in FIG. 13A, FIG. 13B, and FIG. 13C.

For example, if the system makes a scheduling decision for five users, a decision weight generated by the DRL may be {1.5, 1.1, 1.2, 0.2, 0}. However, in a possible case, an estimated throughput of a user 0 and a user 4 is 0. In this case, scheduling the user 0 and/or the user 4 inevitably causes a waste of system resources.

After predicting this case, the performance tracking module may generate a decision mask. For example, the decision masks of the five users are respectively {0, 1, 1, 1, 0}. Based on the decision mask, the performance tracking module may obtain masked decision weights are respectively {0, 1.1, 1.2, 0.2, 0}. In this case, the system schedules a user 2 based on the decision weight information. It can be learned that the scheduling helps reduce a waste of system resources and optimize overall performance of the system.

In an example, an embodiment of this application provides an application example of deploying a DRL algorithm in a cell. After the DRL algorithm is deployed and brought online in each cell, the DRL algorithm may be divided into two phases: an imitation learning phase of an agent and an online reinforcement learning phase of the agent, as shown in FIG. 14. The agent in this example may be a first AI entity, or may be a local second AI entity that has an AI inference capability and/or an AI training capability.

The imitation learning phase of the agent is a first phase. In the first phase, the agent needs training data to perform initialization training on the agent. For example, a base station performs initialization training by using a conventional scheduling algorithm, and stores track information in an entire scheduling process. In this way, the base station can perform supervised learning based on the stored track information, to implement initialization training on the base station.

Optionally, to resolve a problem that reinforcement learning requires a large amount of data for interaction, the imitation learning phase of the agent proposed in this embodiment of this application may be a virtual cell (virtual cell, vCell) assisted training process. The first AI entity may obtain basic true information of a cell, to train and generate a vCell. The basic true information of the cell may include but is not limited to related information such as location information, mobility information, service information, and channel information of a terminal device in the cell. The vCell generally includes a neural network.

For example, in the imitation learning phase of the agent, the first AI entity may use a generative adversarial network (generative adversarial networks, GAN) algorithm. A principle of a training process of the GAN is to fix a generation network and train a discrimination network to distinguish real data from virtual data; then, fix the discrimination network, and train the generation network, so that the virtual data generated by the generation network is similar to the real data as much as possible, and then alternate until convergence occurs.

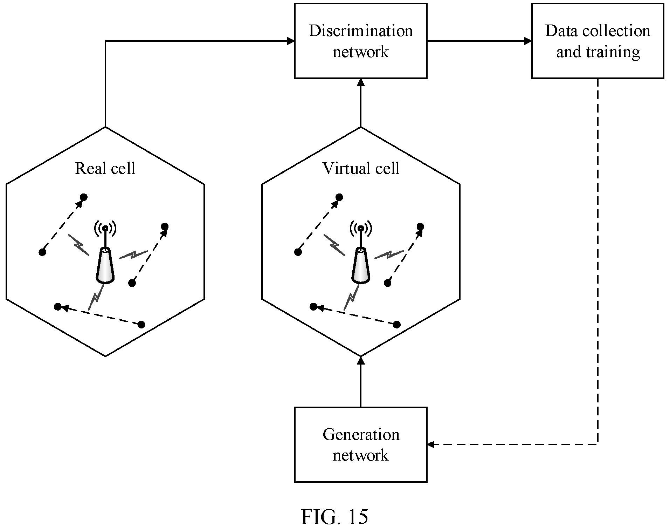

Based on the foregoing principle, the first AI entity may obtain the real data and the virtual data obtained by the generation network, and alternately train the discrimination network and the generation network. For example, the first AI entity may obtain related information such as location information, mobility information, service information, and channel information of the terminal device in the cell, and input the related information into the generation network to obtain the virtual data. A data collection and training module in the first AI entity may train the virtual data, that is, alternately train the discrimination network and the generation network based on the virtual data, to generate the vCell, as shown in FIG. 15.

Optionally, the vCell may be further decomposed into multiple virtual user equipment (virtual UE, vUE) devices and virtual environments (virtual environment, vEnv). The vUE is used for modeling UE, and the vEnv is used for modeling an environment. For example, the vUE may determine location information, mobility information, service information, and the like of the UE by using a multi-agentGAN algorithm. For another example, the vEnv may use a conditional GAN algorithm to generate a corresponding transmission channel based on location information, terrain information, weather information, and the like of the UE.

The online reinforcement learning phase of the agent is a second phase. In the second phase, the agent may interact with the vCell that completes training. Because costs and risks of interaction with the vCell are far less than those of interaction with a real cell, introduction of the vCell greatly improves a convergence speed of the agent.

Optionally, the agent may also perform online training. In other words, the agent in this example may perform online training based on the deep reinforcement learning procedure shown in FIG. 12 and FIG. 13A, FIG. 13B, and FIG. 13C. For a specific implementation procedure, refer to descriptions in embodiments shown in FIG. 12 and FIG. 13A, FIG. 13B, and FIG. 13C. Details are not described herein again.

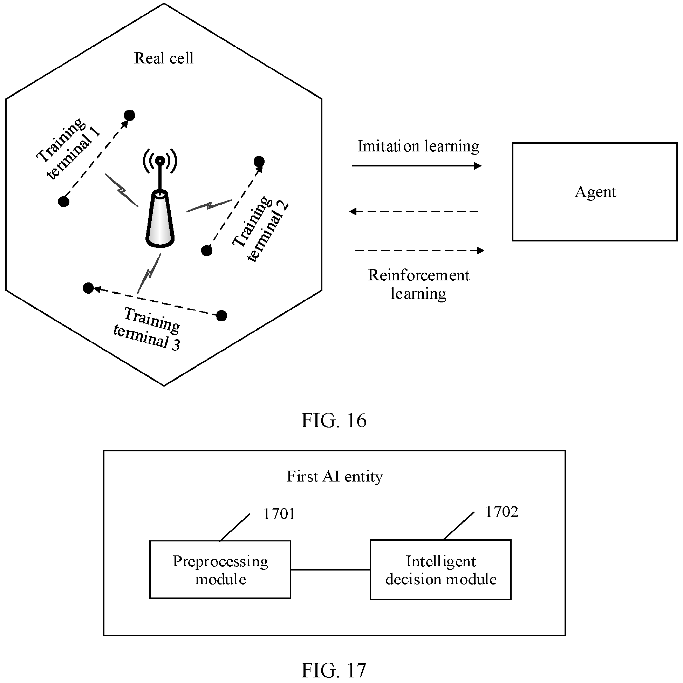

Optionally, an embodiment of this application further provides a training terminal, configured to assist in online training of a DRL algorithm. For example, FIG. 16 is a schematic diagram of deploying a training terminal in a real cell according to an embodiment of this application. As shown in FIG. 16, a plurality of and/or a plurality of types of training terminals (training UE, tUE) may be deployed in the real cell, and each tUE may interact with an agent. An interaction mode may include but is not limited to interaction through imitation learning, interaction through reinforcement learning, and the like.

The tUE has the following characteristics: directly interacting with a reinforcement learning algorithm; obtaining a large quantity of training samples when the tUE is idle; collecting non-communication sensing data in a cell; providing an enhanced coverage service; and the tUE may be a device at a fixed location or a mobile device. In other words, the tUE may be any one or more of types included in the terminal device described in this embodiment of this application.

For example, if the tUE has a characteristic of obtaining a large quantity of training samples when the tUE is idle, the tUE may collect a large quantity of training samples at night. For another example, if the tUE has a characteristic of collecting non-communication sensing data in a cell, the tUE may collect weather information, terrain information, obstacle information, and the like as data that can be used as training samples, and use the data for vCell modeling. For another example, if the tUE has a characteristic of providing an enhanced coverage service, the tUE may alternatively be a device such as a small cell or an uncrewed aerial vehicle.

It can be learned that the tUE can effectively obtain the training data without affecting an actual service. This significantly improves training efficiency.

The following describes in detail related devices in embodiments of this application with reference to FIG. 17 to FIG. 24.

An embodiment of this application provides a first AI entity, as shown in FIG. 17. The first AI entity is configured to implement the method performed by the first AI entity in the foregoing method embodiment, and specifically includes a preprocessing module 1701 and an intelligent decision module 1702.

The preprocessing module 1701 is configured to receive observation information sent by a terminal device. The observation information indicates data used for AI decision. The intelligent decision module 1702 is configured to determine AI decision information of the terminal device based on the observation information and a first AI model. The intelligent decision module 1702 is further configured to send the AI decision information to the terminal device.

In an implementation, the preprocessing module 1701 is further configured to receive AI information of the terminal device. The AI information includes an AI capability parameter.

In an implementation, the preprocessing module 1701 is configured to receive the observation information sent by the terminal device if the AI capability parameter of the terminal device indicates that the terminal device has no AI capability.

In an implementation, the preprocessing module 1701 is further configured to preprocess the observation information to obtain corresponding status information. The intelligent decision module 1702 is further configured to input the status information into the first AI model for inference, to obtain the AI decision information of the terminal device.

For example, the preprocessing module 1701 may be configured to perform S501 in FIG. 5 and S601 to S603 in FIG. 6A and FIG. 6B, and the intelligent decision module 1702 is configured to perform S502 and S503 in FIG. 5, and S604, S605, and S607 in FIG. 6A and FIG. 6B.

It may be understood that the methods performed by the foregoing modules are merely examples. For specific steps performed by the modules, refer to the methods described above.

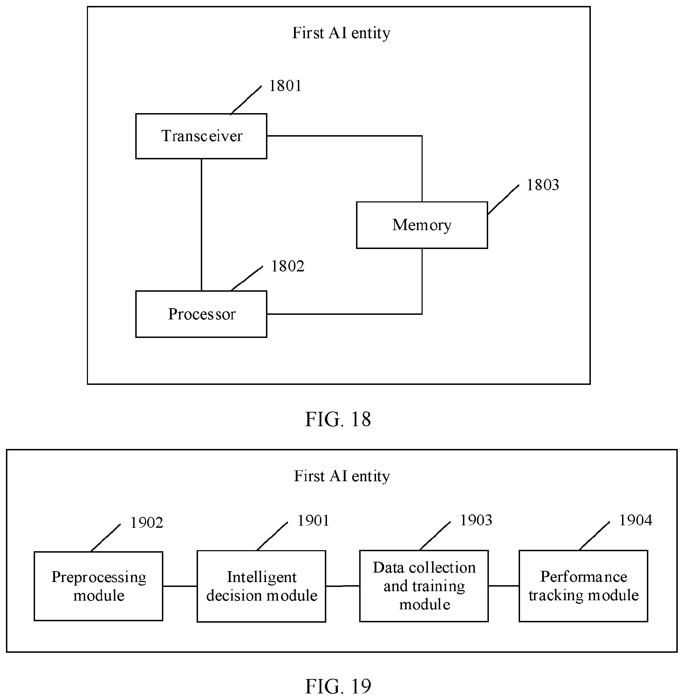

In an implementation, related functions implemented by the modules in FIG. 17 may be implemented by using a transceiver and a processor. FIG. 18 is a schematic diagram of a structure of a first AI entity according to an embodiment of this application. The first AI entity may be a device (for example, a chip) that has an information processing function described in embodiments of this application.

The first AI entity may include a transceiver 1801, at least one processor 1802, and a memory 1803. The transceiver 1801, the processor 1802, and the memory 1803 may be connected to each other through one or more communication buses, or may be connected to each other in another manner.

The transceiver 1801 may be configured to send information or receive information. It may be understood that the transceiver 1801 is a general term, and may include a receiver and a transmitter. For example, the receiver is configured to receive observation information sent by a terminal device. For another example, the transmitter is configured to send AI decision information to the terminal device.

In an implementation, the transceiver 1801 may be configured to implement a part or all of functions of the preprocessing module and the intelligent decision module shown in FIG. 17.

The processor 1802 may be configured to process information. For example, the processor 1802 may invoke program code stored in the memory 1803, to determine the AI decision information of the terminal device based on the observation information and a first AI model.

The processor 1802 may include one or more processors. For example, the processor 1802 may be one or more central processing units (central processing unit, CPU), network processors (network processor, NP), hardware chips, or any combination thereof. When the processor 1802 is one CPU, the CPU may be a single-core CPU or may be a multi-core CPU.

In an implementation, the processor 1802 may be configured to implement a part or all of functions of the preprocessing module and the intelligent decision module shown in FIG. 17.

The memory 1803 is configured to store the program code and the like. The memory 1803 may include a volatile memory (volatile memory), such as a random access memory (random access memory, RAM). The memory 1803 may alternatively include a non-volatile memory (non-volatile memory), such as a read-only memory (read-only memory, ROM), a flash memory (flash memory), a hard disk drive (hard disk drive, HDD), or a solid-state drive (solid-state drive, SSD). The memory 1803 may further include a combination of the foregoing types of memories.

The processor 1802 and the memory 1803 may be coupled through an interface, or may be integrated together. This is not limited in this embodiment.

The transceiver 1801 and the processor 1802 may be configured to implement the information processing method in embodiments of this application. Specific implementations are as follows:
The transceiver 1801 is configured to receive observation information sent by a terminal device. The observation information indicates data used for AI decision. The processor 1802 is configured to determine AI decision information of the terminal device based on the observation information and a first AI model. The transceiver 1801 is further configured to send the AI decision information to the terminal device.

In an implementation, the transceiver 1801 is further configured to receive AI information of the terminal device. The AI information includes an AI capability parameter.

In an implementation, the transceiver 1801 is configured to receive the observation information sent by the terminal device if the AI capability parameter of the terminal device indicates that the terminal device has no AI capability.

In an implementation, the processor 1802 is further configured to preprocess the observation information to obtain corresponding status information, and then input the status information into the first AI model for inference, to obtain the AI decision information of the terminal device.

For example, the transceiver 1801 may be configured to perform S501 and S503 in FIG. 5, and S601, S603, and S605 in FIG. 6A and FIG. 6B, and the processor 1802 is configured to perform S502 in FIG. 5, and S602 and S604 in FIG. 6A and FIG. 6B.

It may be understood that the methods performed by the foregoing modules are merely examples. For specific steps performed by the modules, refer to the methods described above.

An embodiment of this application provides another first AI entity, as shown in FIG. 19. The first AI entity is configured to implement the method performed by the first AI entity in the foregoing method embodiment, and specifically includes an intelligent decision module 1901, a preprocessing module 1902, a data collection and training module 1903, and a performance tracking module 1904. The intelligent decision module 1901 is configured to receive second AI model information sent by a terminal device. The second AI model information does not include user data of the terminal device. The intelligent decision module 1901 is further configured to update first AI model information based on the second AI model information. The first AI model information is AI model information of a first AI entity. The intelligent decision module 1901 is further configured to send updated first AI model information to the terminal device.

In an implementation, the intelligent decision module 1901 is further configured to receive a request message sent by the terminal device. The request message requests the first AI model information. The intelligent decision module 1901 is further configured to send the first AI model information to the terminal device.

In an implementation, the preprocessing module 1902 is configured to receive AI information of the terminal device. The AI information includes an AI capability parameter.

In an implementation, if the AI capability parameter indicates that the terminal device has an AI inference capability, the intelligent decision module 1901 is further configured to receive AI decision information and status information that are sent by the terminal device. The AI decision information is obtained by the terminal device by inputting the status information into a second AI model for inference, and the status information is obtained by the terminal device based on observation information. The observation information indicates data used for AI decision.

In an implementation, the preprocessing module 1902 is further configured to receive AI information of the terminal device. The AI information includes an AI update parameter. The data collection and training module 1903 is configured to receive feedback information if the AI update parameter indicates scheduled AI update or event-triggered AI update. The feedback information indicates data used for AI training.

In an implementation, the intelligent decision module 1901 is further configured to update a first AI model based on AI training data. The AI training data includes one or more of the AI decision information, the status information, or the feedback information.

In an implementation, the feedback information includes reward information; and the reward information is used for updating the first AI model.

In an implementation, the reward information is determined based on a reward function. The reward function is determined based on a target parameter *θ* and a weight value *ϕ* of the target parameter. The target parameter is performance data obtained by the terminal device by executing the AI decision information, and the weight value of the target parameter is determined by the first AI entity based on performance data of one or more terminal devices.

In an implementation, the performance tracking module 1904 is configured to send the reward information to the data collection and training module 1903.

For example, the intelligent decision module 1901 may be configured to perform S901 to S903 in FIG. 9 and S1005 to S1008 in FIG. 10A and FIG. 10B. The preprocessing module 1902 is configured to perform the step of receiving AI information of the terminal device in the foregoing embodiment. The data collection and training module 1903 is configured to perform S809a and S809b in FIG. 8A and FIG. 8B, S1203a, S1203b, and S1204 in FIG. 12, and S1309b and S1310 in FIG. 13A, FIG. 13B, and FIG. 13C.

It may be understood that the methods performed by the foregoing modules are merely examples. For specific steps performed by the modules, refer to the methods described above.

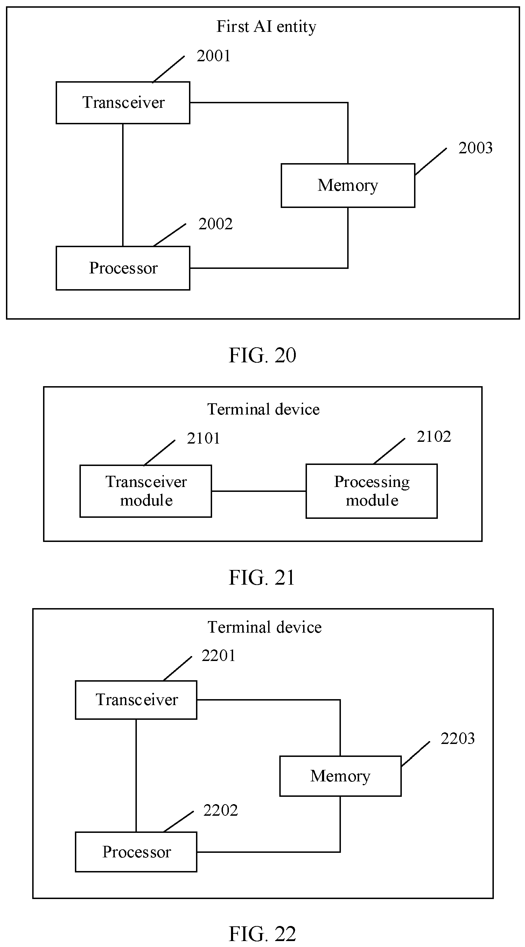

In an implementation, related functions implemented by the modules in FIG. 19 may be implemented by using a transceiver and a processor. FIG. 20 is a schematic diagram of a structure of a first AI entity according to an embodiment of this application. The first AI entity may be a device (for example, a chip) that has an information processing function described in embodiments of this application.

The first AI entity may include a transceiver 2001, at least one processor 2002, and a memory 2003. The transceiver 2001, the processor 2002, and the memory 2003 may be connected to each other through one or more communication buses, or may be connected to each other in another manner.

The transceiver 2001 may be configured to send information or receive information. It may be understood that the transceiver 2001 is a general term, and may include a receiver and a transmitter. For example, the receiver is configured to receive second AI model information sent by a terminal device. For another example, the transmitter is configured to send updated first AI model information to the terminal device.

In an implementation, the transceiver 2001 may be configured to implement a part or all of functions of the intelligent decision module 1901, the preprocessing module 1902, the data collection and training module 1903, and the performance tracking module 1904 shown in FIG. 19.

The processor 2002 may be configured to process information. For example, the processor 2002 may invoke program code stored in the memory 2003, to update the first AI model information based on the second AI model information.

The processor 2002 may include one or more processors. For example, the processor 2002 may be one or more central processing units (central processing unit, CPU), network processors (network processor, NP), hardware chips, or any combination thereof. When the processor 2002 is one CPU, the CPU may be a single-core CPU or may be a multi-core CPU.

In an implementation, the processor 2002 may be configured to implement a part or all of functions of the intelligent decision module 1901, the preprocessing module 1902, the data collection and training module 1903, and the performance tracking module 1904 shown in FIG. 19.

The memory 2003 is configured to store the program code and the like. The memory 2003 may include a volatile memory (volatile memory), such as a random access memory (random access memory, RAM). The memory 2003 may alternatively include a non-volatile memory (non-volatile memory), such as a read-only memory (read-only memory, ROM), a flash memory (flash memory), a hard disk drive (hard disk drive, HDD), or a solid-state drive (solid-state drive, SSD). The memory 2003 may further include a combination of the foregoing types of memories.

The processor 2002 and the memory 2003 may be coupled through an interface, or may be integrated together. This is not limited in this embodiment.

The transceiver 2001 and the processor 2002 may be configured to implement the information processing method in embodiments of this application. Specific implementations are as follows:

The transceiver 2001 is configured to receive second AI model information sent by a terminal device. The second AI model information does not include user data of the terminal device.

The processor 2002 is configured to update first AI model information based on the second AI model information. The first AI model information is AI model information of a first AI entity.

The transceiver 2001 is further configured to send updated first AI model information to the terminal device.

In an implementation, the transceiver 2001 is further configured to:
receive a request message sent by the terminal device, where the request message requests the first AI model information; and
send the first AI model information to the terminal device.

In an implementation, the transceiver 2001 is further configured to:
receive AI information of the terminal device, where the AI information includes an AI capability parameter.

In an implementation, if the AI capability parameter indicates that the terminal device has an AI inference capability, the transceiver 2001 is further configured to:
receive AI decision information and status information that are sent by the terminal device. The AI decision information is obtained by the terminal device by inputting the status information into a second AI model for inference, and the status information is obtained by the terminal device based on observation information. The observation information indicates data used for AI decision.

In an implementation, the transceiver 2001 is further configured to receive AI information of the terminal device. The AI information includes an AI update parameter.

The transceiver 2001 is configured to receive feedback information if the AI update parameter indicates scheduled AI update or event-triggered AI update. The feedback information indicates data used for AI training.

In an implementation, the processor 2002 is further configured to:
update a first AI model based on AI training data. The AI training data includes one or more of the AI decision information, the status information, or the feedback information.

In an implementation, the feedback information includes reward information; and the reward information is used for updating the first AI model.

In an implementation, the reward information is determined based on a reward function. The reward function is determined based on a target parameter *θ* and a weight value *ϕ* of the target parameter. The target parameter is performance data obtained by the terminal device by executing the AI decision information, and the weight value of the target parameter is determined by the first AI entity based on performance data of one or more terminal devices.

For example, the transceiver 1801 may be configured to perform S901 and S903 in FIG. 9, S1004 in FIG. 10A and FIG. 10B, S1201 to S1203a in FIG. 12, and S1301 and S1308b in FIG. 13A, FIG. 13B, and FIG. 13C. The processor 1802 is configured to perform S902 in FIG. 9, S1005 to S1007 in FIG. 10A and FIG. 10B, and S1204 in FIG. 12.

It may be understood that the methods performed by the foregoing modules are merely examples. For specific steps performed by the modules, refer to the methods described above.

An embodiment of this application provides a terminal device, as shown in FIG. 21. The terminal device is configured to implement the method performed by the terminal device in the foregoing method embodiments, and specifically includes a transceiver module 2101 and a processing module 2102. The transceiver module 2101 is configured to send observation information to a first AI entity. The observation information indicates data used for AI decision. The transceiver module 2101 is further configured to receive AI decision information that is of the terminal device and that is sent by the first AI entity. The processing module 2102 is configured to execute a decision based on the AI decision information.

In an implementation, the transceiver module 2101 is further configured to send AI information of the terminal device to the first AI entity. The AI information includes an AI capability parameter. The AI capability parameter indicates that the terminal device has no AI capability.

In an implementation, the AI decision information of the terminal device is obtained by the first AI entity by inputting status information into a first AI model for inference, and the status information is obtained by the first AI entity based on the observation information.

For example, the transceiver module 2101 may be configured to perform S501 and S503 in FIG. 5, and S601 and S605 in FIG. 6A and FIG. 6B. The processing module 2102 is configured to perform S606 in FIG. 6A and FIG. 6B.

It may be understood that the methods performed by the foregoing modules are merely examples. For specific steps performed by the modules, refer to the methods described above.

In an implementation, related functions implemented by the modules in FIG. 21 may be implemented by using a transceiver and a processor. FIG. 22 is a schematic diagram of a structure of a terminal device according to an embodiment of this application. The terminal device may be a device (for example, a chip) that has an information processing function described in embodiments of this application.

The terminal device may include a transceiver 2201, at least one processor 2202, and a memory 2203. The transceiver 2201, the processor 2202, and the memory 2203 may be connected to each other through one or more communication buses, or may be connected to each other in another manner.

The transceiver 2201 may be configured to send information or receive information. It may be understood that the transceiver 2201 is a general term, and may include a receiver and a transmitter. For example, the receiver is configured to receive AI decision information of the terminal device sent by a first AI entity. For another example, the transmitter is configured to send observation information to the first AI entity.

In an implementation, the transceiver 2201 may be configured to implement a part or all of functions of the transceiver module 2101 shown in FIG. 21.

The processor 2202 may be configured to process information. For example, the processor 2202 may invoke program code stored in the memory 2203, to execute a decision based on the AI decision information.

The processor 2202 may include one or more processors. For example, the processor 2202 may be one or more central processing units (central processing unit, CPU), network processors (network processor, NP), hardware chips, or any combination thereof. When the processor 2202 is one CPU, the CPU may be a single-core CPU or may be a multi-core CPU.

In an implementation, the processor 2201 may be configured to implement a part or all of functions of the processing module 2102 shown in FIG. 21.

The memory 2203 is configured to store the program code and the like. The memory 2203 may include a volatile memory (volatile memory), such as a random access memory (random access memory, RAM). The memory 2203 may alternatively include a non-volatile memory (non-volatile memory), such as a read-only memory (read-only memory, ROM), a flash memory (flash memory), a hard disk drive (hard disk drive, HDD), or a solid-state drive (solid-state drive, SSD). The memory 2203 may further include a combination of the foregoing types of memories.

The processor 2202 and the memory 2203 may be coupled through an interface, or may be integrated together. This is not limited in this embodiment.

The transceiver 2201 and the processor 2202 may be configured to implement the information processing method in embodiments of this application. Specific implementations are as follows:

The transceiver 2201 is configured to send observation information to a first AI entity. The observation information indicates data used for AI decision. The transceiver 2201 is further configured to receive AI decision information that is of the terminal device and that is sent by the first AI entity. The processor 2202 is configured to execute a decision based on the AI decision information.

In an implementation, the transceiver 2201 is further configured to send AI information of the terminal device to the first AI entity. The AI information includes an AI capability parameter. The AI capability parameter indicates that the terminal device has no AI capability.

In an implementation, the AI decision information of the terminal device is obtained by the first AI entity by inputting status information into a first AI model for inference, and the status information is obtained by the first AI entity based on the observation information.

For example, the transceiver 2201 may be configured to perform S501 and S503 in FIG. 5, and S601 and S605 in FIG. 6A and FIG. 6B. The processor 2202 is configured to perform S606 in FIG. 6A and FIG. 6B.

It may be understood that the methods performed by the foregoing modules are merely examples. For specific steps performed by the modules, refer to the methods described above.

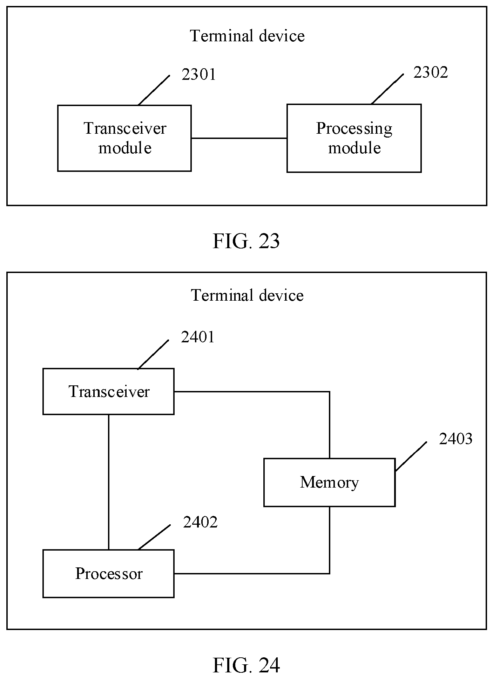

An embodiment of this application provides another terminal device, as shown in FIG. 23. The terminal device is configured to implement the method performed by the terminal device in the foregoing method embodiments, and specifically includes a transceiver module 2301 and a processing module 2302. The transceiver module 2301 is configured to send a request message to a first AI entity. The request message requests first AI model information. The transceiver module 2301 is further configured to receive the first AI model information sent by the first AI entity. The processing module 2302 is configured to input status information into a second AI model for inference, to obtain AI decision information of the terminal device. The status information is determined based on observation information. The observation information indicates data used for AI decision. The second AI model is determined by the terminal device based on the first AI model information.

In an implementation, the transceiver module 2301 is further configured to send AI information of the terminal device to the first AI entity. The AI information includes an AI capability parameter. The AI capability parameter indicates that the terminal device has an AI inference capability.

In an implementation, the transceiver module 2301 is further configured to send the AI decision information and the status information to the first AI entity.

In an implementation, AI information of the terminal device includes an AI capability parameter and/or an AI update parameter. The transceiver module 2301 is further configured to send feedback information to the first AI entity if the AI update parameter indicates scheduled AI update or event-triggered AI update. The feedback information indicates data used for AI training.

In an implementation, the processing module 2302 is further configured to obtain the second AI model based on AI training data if the AI capability parameter indicates that the terminal device has an AI training capability. The AI training data includes one or more of the AI decision information, the status information, or the feedback information.

In an implementation, the transceiver module 2301 is further configured to send second AI model information to the first AI entity. The transceiver module 2301 is further configured to receive updated first AI model information sent by the first AI entity. The updated first AI model information is determined by the first AI entity based on the second AI model information.

In an implementation, the feedback information includes reward information; and the reward information is used for updating a first AI model.

In an implementation, the reward information is determined based on a reward function. The reward function is determined based on a target parameter *θ* and a weight value *ϕ* of the target parameter. The target parameter is performance data obtained by the terminal device by executing the AI decision information, and the weight value of the target parameter is determined by the first AI entity based on performance data of one or more terminal devices.

For example, the transceiver module 2301 may be configured to perform S701 and S702 in FIG. 7, S801 and S802 in FIG. 8A and FIG. 8B, S901 and S903 in FIG. 9, and S1004 and S1008 in FIG. 10A and FIG. 10B, S1203a in FIG. 12, and S1301 and S 1308b in FIG. 13A, FIG. 13B, and FIG. 13C. The processing module 2302 is configured to perform S703 in FIG. 7, S803, S804, and S808 in FIG. 8A and FIG. 8B, S1003 in FIG. 10A and FIG. 10B, and S1309a in FIG. 13A, FIG. 13B, and FIG. 13C.

It may be understood that the methods performed by the foregoing modules are merely examples. For specific steps performed by the modules, refer to the methods described above.

In an implementation, related functions implemented by the modules in FIG. 23 may be implemented by using a transceiver and a processor. FIG. 24 is a schematic diagram of a structure of a terminal device according to an embodiment of this application. The terminal device may be a device (for example, a chip) that has an information processing function described in embodiments of this application.

The terminal device may include a transceiver 2401, at least one processor 2402, and a memory 2403. The transceiver 2401, the processor 2402, and the memory 2403 may be connected to each other through one or more communication buses, or may be connected to each other in another manner.

The transceiver 2401 may be configured to send information or receive information. It may be understood that the transceiver 2401 is a general term, and may include a receiver and a transmitter. For example, the receiver is configured to receive first AI model information sent by a first AI entity. For another example, the transmitter is configured to send a request message to the first AI entity.

In an implementation, the transceiver 2401 may be configured to implement a part or all of functions of the transceiver module 2301 shown in FIG. 23.

The processor 2402 may be configured to process information. For example, the processor 2402 may invoke program code stored in the memory 2403, to execute a decision based on the AI decision information.

The processor 2402 may include one or more processors. For example, the processor 2402 may be one or more central processing units (central processing unit, CPU), network processors (network processor, NP), hardware chips, or any combination thereof. When the processor 2402 is one CPU, the CPU may be a single-core CPU or may be a multi-core CPU.

In an implementation, the processor 2402 may be configured to implement a part or all of functions of the processing module 2302 shown in FIG. 23.

The memory 2403 is configured to store the program code and the like. The memory 2403 may include a volatile memory (volatile memory), such as a random access memory (random access memory, RAM). The memory 2403 may alternatively include a non-volatile memory (non-volatile memory), such as a read-only memory (read-only memory, ROM), a flash memory (flash memory), a hard disk drive (hard disk drive, HDD), or a solid-state drive (solid-state drive, SSD). The memory 2403 may further include a combination of the foregoing types of memories.

The processor 2402 and the memory 2403 may be coupled through an interface, or may be integrated together. This is not limited in this embodiment.

The transceiver 2401 and the processor 2402 may be configured to implement the information processing method in embodiments of this application. Specific implementations are as follows:

The transceiver 2401 is configured to send a request message to a first AI entity. The request message requests first AI model information. The transceiver 2401 is further configured to receive the first AI model information sent by the first AI entity. The processor 2402 is configured to input status information into a second AI model for inference, to obtain AI decision information of the terminal device. The status information is determined based on observation information. The observation information indicates data used for AI decision. The second AI model is determined by the terminal device based on the first AI model information.

In an implementation, the transceiver 2401 is further configured to send AI information of the terminal device to the first AI entity. The AI information includes an AI capability parameter. The AI capability parameter indicates that the terminal device has an AI inference capability.

In an implementation, the transceiver 2401 is further configured to send the AI decision information and the status information to the first AI entity.

In an implementation, AI information of the terminal device includes an AI capability parameter and/or an AI update parameter. The transceiver 2401 is further configured to send feedback information to the first AI entity if the AI update parameter indicates scheduled AI update or event-triggered AI update. The feedback information indicates data used for AI training.

In an implementation, the transceiver 2401 is further configured to obtain the second AI model based on AI training data if the AI capability parameter indicates that the terminal device has an AI training capability. The AI training data includes one or more of the AI decision information, the status information, or the feedback information.

In an implementation, the transceiver 2401 is further configured to send second AI model information to the first AI entity. The transceiver 2401 is further configured to receive updated first AI model information sent by the first AI entity. The updated first AI model information is determined by the first AI entity based on the second AI model information.

In an implementation, the feedback information includes reward information; and the reward information is used for updating a first AI model.

In an implementation, the reward information is determined based on a reward function. The reward function is determined based on a target parameter *θ* and a weight value *ϕ* of the target parameter. The target parameter is performance data obtained by the terminal device by executing the AI decision information, and the weight value of the target parameter is determined by the first AI entity based on performance data of one or more terminal devices.

For example, the transceiver 2401 may be configured to perform S701 and S702 in FIG. 7, S801 and S802 in FIG. 8A and FIG. 8B, S901 and S903 in FIG. 9, S1004 and S1008 in FIG. 10A and FIG. 10B, S1203a in FIG. 12, and S1301 and S1308b in FIG. 13A, FIG. 13B, and FIG. 13C. The processor 2402 is configured to perform S703 in FIG. 7, S803, S804, and S808 in FIG. 8A and FIG. 8B, S1003 in FIG. 10A and FIG. 10B, and S1309a in FIG. 13A, FIG. 13B, and FIG. 13C.

It may be understood that the methods performed by the foregoing modules are merely examples. For specific steps performed by the modules, refer to the methods described above.

An embodiment of this application provides a communication system. The communication system includes the terminal device and the first AI entity described in the foregoing embodiments.

An embodiment of this application provides a computer-readable storage medium. The computer-readable storage medium stores a program or instructions. When the program or the instructions is/are run on a computer, the computer is enabled to perform the information processing method in embodiments of this application.

An embodiment of this application provides a chip or a chip system. The chip or the chip system includes at least one processor and an interface, the interface is interconnected to the at least one processor through a line, and the at least one processor is configured to run a computer program or instructions, to perform the information processing method in embodiments of this application.

The interface in the chip may be an input/output interface, a pin, a circuit, or the like.

The chip system in the foregoing aspects may be a system-on-chip (system on chip, SOC), a baseband chip, or the like. The baseband chip may include a processor, a channel encoder, a digital signal processor, a modem, an interface module, and the like.

In an implementation, the chip or the chip system described in this application further includes at least one memory, and the at least one memory stores instructions. The memory may be a storage module inside the chip, for example, a register or a cache, or may be a storage module (for example, a read-only memory or a random access memory) of the chip.

All or a part of the foregoing embodiments may be implemented by software, hardware, firmware, or any combination thereof. When software is used to implement the embodiments, all or a part of the embodiments may be implemented in a form of a computer program product.

The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner.

The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), a semiconductor medium (for example, a solid state disk (Solid State Disk, SSD)), or the like.

Further embodiments of the present invention are provided in the following. It should be noted that the numbering used in the following section does not necessarily need to comply with the numbering used in the previous sections.

Embodiment 1. An information processing method, applied to a first artificial intelligence AI entity in an access network, wherein the method comprises:
receiving, by the first AI entity, second AI model information sent by a terminal device, wherein the second AI model information does not comprise user data of the terminal device;
updating, by the first AI entity, first AI model information based on the second AI model information, wherein the first AI model information is AI model information of the first AI entity; and
sending, by the first AI entity, updated first AI model information to the terminal device.

Embodiment 2. The method according to embodiment 1, wherein the method further comprises:
receiving, by the first AI entity, a request message sent by the terminal device, wherein the request message requests the first AI model information; and
sending, by the first AI entity, the first AI model information to the terminal device.

Embodiment 3. The method according to embodiment 2, wherein before the receiving, by the first AI entity, the request message sent by the terminal device, the method further comprises:
receiving, by the first AI entity, AI information of the terminal device, wherein the AI information comprises an AI capability parameter.

Embodiment 4. The method according to embodiment 3, wherein if the AI capability parameter indicates that the terminal device has an AI inference capability, the first AI entity receives AI decision information and status information that are sent by the terminal device, wherein the AI decision information is obtained by the terminal device by inputting the status information into a second AI model for inference, the status information is obtained by the terminal device based on observation information, and the observation information indicates data used for AI decision.

Embodiment 5. The method according to embodiment 1, wherein the method further comprises:
receiving, by the first AI entity, AI information of the terminal device, wherein the AI information comprises an AI update parameter; and
receiving, by the first AI entity, feedback information if the AI update parameter indicates scheduled AI update or event-triggered AI update, wherein the feedback information indicates data used for AI training.

Embodiment 6. The method according to embodiment 5, wherein the method further comprises:
updating, by the first AI entity, a first AI model based on AI training data, wherein the AI training data comprises one or more of the AI decision information, the status information, or the feedback information.

Embodiment 7. The method according to embodiment 5, wherein the feedback information comprises reward information; and the reward information is used for updating the first AI model.

Embodiment 8. The method according to embodiment 7, wherein the reward information is determined based on a reward function, the reward function is determined based on a target parameter *θ* and a weight value *ϕ* of the target parameter, the target parameter is performance data obtained by the terminal device by executing the AI decision information, and the weight value of the target parameter is determined by the first AI entity based on performance data of one or more terminal devices.

Embodiment 9. An information processing method, comprising:
sending, by a terminal device, a request message to a first artificial intelligence AI entity, wherein the request message requests first AI model information;
receiving, by the terminal device, the first AI model information sent by the first AI entity; and
inputting, by the terminal device, status information into a second AI model for inference, to obtain AI decision information of the terminal device, wherein the status information is determined based on observation information, the observation information indicates data used for AI decision, and the second AI model is determined by the terminal device based on the first AI model information.

Embodiment 10. The method according to embodiment 9, wherein before the sending, by the terminal device, the request message to the first AI entity, the method further comprises:
sending, by the terminal device, AI information of the terminal device to the first AI entity, wherein the AI information comprises an AI capability parameter, and the AI capability parameter indicates that the terminal device has an AI inference capability.

Embodiment 11. The method according to embodiment 9, wherein the method further comprises:
sending, by the terminal device, the AI decision information and the status information to the first AI entity.

Embodiment 12. The method according to embodiment 9, wherein AI information of the terminal device comprises an AI capability parameter and/or an AI update parameter; and the method further comprises:
sending, by the terminal device, feedback information to the first AI entity if the AI update parameter indicates scheduled AI update or event-triggered AI update, wherein the feedback information indicates data used for AI training.

Embodiment 13. The method according to embodiment 12, wherein the method further comprises:
obtaining, by the terminal device, second AI model information based on AI training data if the AI capability parameter indicates that the terminal device has an AI training capability, wherein the AI training data comprises one or more of the AI decision information, the status information, or the feedback information.

Embodiment 14. The method according to embodiment 13, wherein the method further comprises:
sending, by the terminal device, the second AI model information to the first AI entity; and
receiving, by the terminal device, updated first AI model information sent by the first AI entity, wherein the updated first AI model information is determined by the first AI entity based on the second AI model information.

Embodiment 15. The method according to embodiment 13, wherein the feedback information comprises reward information; and the reward information is used for updating a first AI model.

Embodiment 16. The method according to embodiment 15, wherein the reward information is determined based on a reward function, the reward function is determined based on a target parameter *θ* and a weight value *ϕ* of the target parameter, the target parameter is performance data obtained by the terminal device by executing the AI decision information, and the weight value of the target parameter is determined by the first AI entity based on performance data of one or more terminal devices.

Embodiment 17. A first artificial intelligence AI entity, comprising:
an intelligent decision module, configured to receive second AI model information sent by a terminal device, wherein the second AI model information does not comprise user data of the terminal device, wherein
the intelligent decision module is further configured to update first AI model information based on the second AI model information, wherein the first AI model information is AI model information of the first AI entity; and
the intelligent decision module is further configured to send updated first AI model information to the terminal device.

Embodiment 18. The entity according to embodiment 17, wherein the intelligent decision module is further configured to:
receive a request message sent by the terminal device, wherein the request message requests the first AI model information; and
send the first AI model information to the terminal device.

Embodiment 19. The entity according to embodiment 18, wherein the first AI entity further comprises a preprocessing module; and the preprocessing module is configured to:
receive AI information of the terminal device, wherein the AI information comprises an AI capability parameter.

Embodiment 20. The entity according to embodiment 19, wherein if the AI capability parameter indicates that the terminal device has an AI inference capability, the intelligent decision module is further configured to:
receive AI decision information and status information that are sent by the terminal device, wherein the AI decision information is obtained by the terminal device by inputting the status information into a second AI model for inference, the status information is obtained by the terminal device based on observation information, and the observation information indicates data used for AI decision.

Embodiment 21. The entity according to embodiment 17, wherein the preprocessing module is further configured to receive AI information of the terminal device, wherein the AI information comprises an AI update parameter; and
the first AI entity further comprises a data collection and training module; and the data collection and training module is configured to receive feedback information if the AI update parameter indicates scheduled AI update or event-triggered AI update, wherein the feedback information indicates data used for AI training.

Embodiment 22. The entity according to embodiment 21, wherein the intelligent decision module is further configured to:
update a first AI model based on AI training data, wherein the AI training data comprises one or more of the AI decision information, the status information, or the feedback information.

Embodiment 23. The entity according to embodiment 21, wherein the feedback information comprises reward information; and the reward information is used for updating the first AI model.

Embodiment 24. The entity according to embodiment 23, wherein the reward information is determined based on a reward function, the reward function is determined based on a target parameter*θ* and a weight value *ϕ* of the target parameter, the target parameter is performance data obtained by the terminal device by executing the AI decision information, and the weight value of the target parameter is determined by the first AI entity based on performance data of one or more terminal devices.

Embodiment 25. A terminal device, comprising:
a transceiver module, configured to send a request message to a first artificial intelligence AI entity, wherein the request message requests first AI model information, wherein
the transceiver module is further configured to receive the first AI model information sent by the first AI entity; and
a processing module, configured to input status information into a second AI model for inference, to obtain AI decision information of the terminal device, wherein the status information is determined based on observation information, the observation information indicates data used for AI decision, and the second AI model is determined by the terminal device based on the first AI model information.

Embodiment 26. The device according to embodiment 25, wherein the transceiver module is further configured to:
send AI information of the terminal device to the first AI entity, wherein the AI information comprises an AI capability parameter, and the AI capability parameter indicates that the terminal device has an AI inference capability.

27. The device according to embodiment 25, wherein the transceiver module is further configured to:
send the AI decision information and the status information to the first AI entity.

Embodiment 28. The device according to embodiment 25, wherein AI information of the terminal device comprises an AI capability parameter and/or an AI update parameter, and the transceiver module is further configured to:
send feedback information to the first AI entity if the AI update parameter indicates scheduled AI update or event-triggered AI update, wherein the feedback information indicates data used for AI training.

Embodiment 29. The device according to embodiment 28, wherein the processing module is further configured to:
obtain second AI model information based on AI training data if the AI capability parameter indicates that the terminal device has an AI training capability, wherein the AI training data comprises one or more of the AI decision information, the status information, or the feedback information.

Embodiment 30. The device according to embodiment 29, wherein the transceiver module is further configured to:
send the second AI model information to the first AI entity; and
receive updated first AI model information sent by the first AI entity, wherein the updated first AI model information is determined by the first AI entity based on the second AI model information.

Embodiment 31. The device according to embodiment 29, wherein the feedback information comprises reward information; and the reward information is used for updating a first AI model.

Embodiment 32. The device according to embodiment 31, wherein the reward information is determined based on a reward function, the reward function is determined based on a target parameter *θ* and a weight value *ϕ* of the target parameter, the target parameter is performance data obtained by the terminal device by executing the AI decision information, and the weight value of the target parameter is determined by the first AI entity based on performance data of one or more terminal devices.

Embodiment 33. An information processing method, applied to a first AI entity in an access network, wherein the method comprises:
receiving, by the first AI entity, observation information from a terminal device, wherein the observation information indicates data used for AI decision; and
determining, by the first AI entity, AI decision information of the terminal device based on the observation information and a first AI model, and sending the AI decision information to the terminal device.

Embodiment 34. The method according to embodiment 33, wherein before the receiving, by the first AI entity, the observation information sent by the terminal device, the method further comprises:
receiving, by the first AI entity, AI information from the terminal device, wherein the AI information comprises an AI capability parameter, and the AI capability parameter indicates whether the terminal device has an AI inference capability and/or an AI training capability.

Embodiment 35. The method according to embodiment 34, wherein the receiving, by the first AI entity, the observation information from the terminal device comprises:
receiving, by the first AI entity, the observation information sent by the terminal device if the AI capability parameter of the terminal device indicates that the terminal device has no AI capability.

Embodiment 36. The method according to any one of embodiments 33 to 35, wherein the determining, by the first AI entity, the AI decision information of the terminal device based on the observation information and the first AI model comprises:
preprocessing, by the first AI entity, the observation information to determine corresponding status information; and
inputting, by the first AI entity, the status information into the first AI model for inference, to determine the AI decision information of the terminal device.

Embodiment 37. An information processing method, comprising:
sending, by a terminal device, observation information to a first AI entity, wherein the observation information indicates data used for AI decision by the first AI entity; and
receiving, by the terminal device, AI decision information from the first AI entity, and executing a decision based on the AI decision information.

Embodiment 38. The method according to embodiment 37, wherein before the sending, by the terminal device, the observation information to the first AI entity, the method further comprises:
sending, by the terminal device, AI information of the terminal device to the first AI entity, wherein the AI information comprises an AI capability parameter, and the AI capability parameter indicates that the terminal device has no AI capability.

Embodiment 39. The method according to embodiment 37 or 38, wherein the AI decision information of the terminal device is obtained by the first AI entity by inputting status information into a first AI model for inference, and the status information is obtained by the first AI entity based on the observation information.

Embodiment 40. A first AI entity, comprising:
a preprocessing module, configured to receive observation information from a terminal device, wherein the observation information indicates data used for AI decision; and
an intelligent decision module, configured to: determine AI decision information of the terminal device based on the observation information and a first AI model, and send the AI decision information to the terminal device.

Embodiment 41. The entity according to embodiment 40, wherein the preprocessing module is further configured to receive AI information from the terminal device, wherein the AI information comprises an AI capability parameter, and the AI capability parameter indicates whether the terminal device has an AI inference capability and/or an AI training capability.

Embodiment 42. The entity according to embodiment 41, wherein that the preprocessing module is configured to receive the observation information from the terminal device comprises:
receiving, by the preprocessing module, the observation information sent by the terminal device if the AI capability parameter of the terminal device indicates that the terminal device has no AI capability.

Embodiment 43. The entity according to any one of embodiments 40 to 42, wherein that the intelligent decision module is configured to determine the AI decision information of the terminal device based on the observation information and the first AI model comprises:
preprocess the observation information to determine corresponding status information; and
input the status information into the first AI model for inference, to determine the AI decision information of the terminal device.

Embodiment 44. A terminal device, comprising:
a transceiver module, configured to send observation information to a first artificial intelligence AI entity, wherein the observation information indicates data used for AI decision by the first AI entity, wherein
the transceiver module is further configured to receive AI decision information from the first AI entity; and
a processing module, configured to execute a decision based on the AI decision information.

Embodiment 45. The device according to embodiment 44, wherein the transceiver module is further configured to send AI information of the terminal device to the first AI entity, wherein the AI information comprises an AI capability parameter, and the AI capability parameter indicates that the terminal device has no AI capability.

Embodiment 46. The device according to embodiment 44 or 45, wherein the AI decision information of the terminal device is obtained by the first AI entity by inputting status information into a first AI model for inference, and the status information is obtained by the first AI entity based on the observation information.

Embodiment 47. A first AI entity, comprising a memory and a processor, wherein
the memory is configured to store instructions; and
the processor is configured to execute the instructions, so that the method according to any one of embodiments 1 to 8 or embodiments 33 to 36 is performed.

Embodiment 48. A terminal device, comprising a memory and a processor, wherein
the memory is configured to store instructions; and
the processor is configured to execute the instructions, so that the method according to any one of embodiments 9 to 16 or embodiments 37 to 39 is performed.

Embodiment 49. A computer-readable storage medium, comprising a program or instructions, wherein when the program or the instructions is/are run on a computer, the method according to any one of embodiments 1 to 8, 9 to 16, 33 to 36, or 37 to 39 is performed.

Embodiment 50. A computer program product comprising instructions, wherein when the computer program product runs on a computer, the method according to any one of embodiments 1 to 8, 9 to 16, 33 to 36, or 37 to 39 is performed.

Embodiment 51. A communication system, comprising the artificial intelligence AI entity according to any one of embodiments 17 to 24 and the terminal device according to embodiments 25 to 32, or comprising the artificial intelligence AI entity according to any one of embodiments 40 to 43 and the terminal device according to any one of embodiments 44 to 46.

A person of ordinary skill in the art may be aware that, in combination with the examples described in embodiments disclosed in this specification, modules and algorithm steps can be implemented by electronic hardware, computer software, or a combination thereof. To clearly describe the interchangeability between hardware and software, the foregoing has generally described compositions and steps of the examples based on functions. Whether the functions are performed by using hardware or software depends on particular applications and design constraints of the technical solutions. A person skilled in the art may use different methods to implement the described functions for each particular application, but it should not be considered that the implementation goes beyond the scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information processing method, applied to a first artificial intelligence, AI entity in an access network, wherein the method comprises:
receiving, by the first AI entity, second AI model information sent by a terminal device, wherein the second AI model information does not comprise user data of the terminal device;
updating, by the first AI entity, first AI model information based on the second AI model information, wherein the first AI model information is AI model information of the first AI entity; and
sending, by the first AI entity, updated first AI model information to the terminal device.

2. The method according to claim 1, wherein the method further comprises:
receiving, by the first AI entity, a request message sent by the terminal device, wherein the request message requests the first AI model information; and
sending, by the first AI entity, the first AI model information to the terminal device.

3. The method according to claim 2, wherein before the receiving, by the first AI entity, the request message sent by the terminal device, the method further comprises:
receiving, by the first AI entity, AI information of the terminal device, wherein the AI information comprises an AI capability parameter.

4. The method according to claim 3, wherein if the AI capability parameter indicates that the terminal device has an AI inference capability, the first AI entity receives AI decision information and status information that are sent by the terminal device, wherein the AI decision information is obtained by the terminal device by inputting the status information into a second AI model for inference, the status information is obtained by the terminal device based on observation information, and the observation information indicates data used for AI decision.

5. The method according to claim 1, wherein the method further comprises:
receiving, by the first AI entity, AI information of the terminal device, wherein the AI information comprises an AI update parameter; and
receiving, by the first AI entity, feedback information if the AI update parameter indicates scheduled AI update or event-triggered AI update, wherein the feedback information indicates data used for AI training.

6. The method according to claim 5, wherein the method further comprises:
updating, by the first AI entity, a first AI model based on AI training data, wherein the AI training data comprises one or more of AI decision information, status information, or the feedback information.

7. The method according to claim 5, wherein the feedback information comprises reward information; and the reward information is used for updating the first AI model, wherein the reward information is determined based on a reward function, the reward function is determined based on a target parameter *θ* and a weight value *ϕ* of the target parameter, the target parameter is performance data obtained by the terminal device by executing the AI decision information, and the weight value of the target parameter is determined by the first AI entity based on performance data of one or more terminal devices.

8. An information processing method, comprising:
sending, by a terminal device, a request message to a first artificial intelligence AI entity, wherein the request message requests first AI model information;
receiving, by the terminal device, the first AI model information sent by the first AI entity; and
inputting, by the terminal device, status information into a second AI model for inference, to obtain AI decision information of the terminal device, wherein the status information is determined based on observation information, the observation information indicates data used for AI decision, and the second AI model is determined by the terminal device based on the first AI model information.

9. The method according to claim 8, wherein before the sending, by the terminal device, the request message to the first AI entity, the method further comprises:
sending, by the terminal device, AI information of the terminal device to the first AI entity, wherein the AI information comprises an AI capability parameter, and the AI capability parameter indicates that the terminal device has an AI inference capability.

10. The method according to claim 8, wherein the method further comprises:
sending, by the terminal device, the AI decision information and the status information to the first AI entity.

11. The method according to claim 8, wherein AI information of the terminal device comprises an AI capability parameter and/or an AI update parameter; and the method further comprises:
sending, by the terminal device, feedback information to the first AI entity if the AI update parameter indicates scheduled AI update or event-triggered AI update, wherein the feedback information indicates data used for AI training.

12. The method according to claim 11, wherein the method further comprises:
obtaining, by the terminal device, second AI model information based on AI training data if the AI capability parameter indicates that the terminal device has an AI training capability, wherein the AI training data comprises one or more of the AI decision information, the status information, or the feedback information.

13. The method according to claim 12, wherein the method further comprises:
sending, by the terminal device, the second AI model information to the first AI entity; and
receiving, by the terminal device, updated first AI model information sent by the first AI entity, wherein the updated first AI model information is determined by the first AI entity based on the second AI model information.

14. The method according to claim 12, wherein the feedback information comprises reward information; and the reward information is used for updating a first AI model, wherein the reward information is determined based on a reward function, the reward function is determined based on a target parameter *θ* and a weight value *ϕ* of the target parameter, the target parameter is performance data obtained by the terminal device by executing the AI decision information, and the weight value of the target parameter is determined by the first AI entity based on performance data of one or more terminal devices.

15. A first AI entity, comprising a processor and a memory storing instructions, which when executed by the processor, cause the first AI entity to: perform the method according to any one of claims 1 to 7 is performed.
